(19) **Europäisches Patentamt / European Patent Office / Office européen des brevets**

(11) **EP 2 856 433 B1**

(12) **FASCICULE DE BREVET EUROPEEN**

(45) Date de publication et mention
de la délivrance du brevet:
**09.01.2019 Bulletin 2019/02**

(21) Numéro de dépôt: **13726449.5**

(22) Date de dépôt: **21.05.2013**

(51) Int Cl.:
*G06T 19/20* (2011.01)     *G06T 17/00* (2006.01)

(86) Numéro de dépôt international:
**PCT/EP2013/060422**

(87) Numéro de publication internationale:
**WO 2013/174819 (28.11.2013 Gazette 2013/48)**

(54) **PROCÉDÉ DE TRAITEMENT DE DONNÉES POUR TRANSFORMER UNE PREMIÈRE SURFACE 3D ADAPTÉE POUR REVÊTIR UN PREMIER OBJET EN UNE DEUXIÈME SURFACE 3D ADAPTÉE POUR REVÊTIR UN DEUXIÈME OBJET, PROGRAMME D'ORDINATEUR ET DISPOSITIF DE TRAITEMENT ASSOCIÉS**

DATENVERARBEITUNGSVERFAHREN ZUR UMWANDLUNG EINER ERSTEN 3D OBERFLÄCHE ZUR BESCHICHTUNG EINES ERSTEN OBJEKTS IN EINE ZWEITE 3D OBERFLÄCHE ZUR BESCHICHTUNG EINES ZWEITEN OBJEKTS SOWIE ZUGEHÖRIGES COMPUTERPROGRAMM UND VERARBEITUNGSVORRICHTUNG

DATA PROCESSING METHOD FOR TRANSFORMING A FIRST 3D SURFACE SUITABLE FOR COATING A FIRST OBJECT INTO A SECOND 3D SURFACE SUITABLE FOR COATING A SECOND OBJECT, AND ASSOCIATED COMPUTER PROGRAM AND PROCESSING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.05.2012 FR 1254869**

(43) Date de publication de la demande:
**08.04.2015 Bulletin 2015/15**

(73) Titulaires:
• **INRIA - Institut National de Recherche en Informatique et en Automatique**
**78150 Le Chesnay (FR)**
• **Institut Polytechnique de Grenoble**
**38000 Grenoble (FR)**
• **The University of British Columbia**
**Vancouver, British Columbia V6T 1Z4 (CA)**

(72) Inventeurs:
• **BROUET, Rémi**
**F-38000 Grenoble (FR)**
• **SHEFFER, Alla**
**Vancouver, British Columbia V6K 3L7 (CA)**
• **CANI, Marie-Paule**
**F-38920 Meylan (FR)**
• **BOISSIEUX, Laurence**
**F-38120 Saint-Egrève (FR)**

(74) Mandataire: **Palacci, Jeremie et al**
**Cabinet Netter**
**36, avenue Hoche**
**75008 Paris (FR)**

(56) Documents cités:
**WO-A1-2012/061834**

• **JITUO LI ET AL: "Customizing 3D garments based on volumetric deformation", COMPUTERS IN INDUSTRY, ELSEVIER SCIENCE PUBLISHERS. AMSTERDAM, NL, vol. 62, no. 7, 7 avril 2011 (2011-04-07), pages 693-707, XP028247483, ISSN: 0166-3615, DOI: 10.1016/J.COMPIND.2011.04.002 [extrait le 2011-04-13]**
• **ROBERT W. SUMNER ET AL: "Deformation transfer for triangle meshes", ACM TRANSACTIONS ON GRAPHICS, vol. 23, no. 3, 1 août 2004 (2004-08-01), page 399, XP055052942, ISSN: 0730-0301, DOI: 10.1145/1015706.1015736**
• **YUWEI MENG ET AL: "Flexible shape control for automatic resizing of apparel products", COMPUTER-AIDED DESIGN, vol. 44, no. 1, 1 janvier 2012 (2012-01-01), pages 68-76, XP055052902, ISSN: 0010-4485, DOI: 10.1016/j.cad.2010.11.008 cité dans la demande**

- **CHARLIE C L WANG ET AL: "Volume Parameterization for Design Automation of Customized Free-Form Products", IEEE TRANSACTIONS ON AUTOMATION SCIENCE AND ENGINEERING, IEEE SERVICE CENTER, NEW YORK, NY, US, vol. 4, no. 1, 1 janvier 2007 (2007-01-01) , pages 11-21, XP011152874, ISSN: 1545-5955, DOI: 10.1109/TASE.2006.872112 cité dans la demande**
- **WANG C C L ET AL: "Design automation for customized apparel products", COMPUTER AIDED DESIGN, ELSEVIER PUBLISHERS BV., BARKING, GB, vol. 37, no. 7, 1 juin 2005 (2005-06-01), pages 675-691, XP027649897, ISSN: 0010-4485 [extrait le 2005-06-01] cité dans la demande**
- **VLADISLAV KRAEVOY ET AL: "Non-homogeneous resizing of complex models", ACM TRANSACTIONS ON GRAPHICS, vol. 27, no. 5, 1 décembre 2008 (2008-12-01), page 1, XP055052915, ISSN: 0730-0301, DOI: 10.1145/1409060.1409064 cité dans la demande**
- **MARTIN BOKELOH ET AL: "Pattern-aware shape deformation using sliding dockers", ACM TRANSACTIONS ON GRAPHICS, vol. 30, no. 6, 1 décembre 2011 (2011-12-01), page 1, XP055052939, ISSN: 0730-0301, DOI: 10.1145/2070781.2024157**
- **ALLA SHEFFER ET AL: "ABF++: fast and robust angle based flattening", ACM TRANSACTIONS ON GRAPHICS, vol. 24, no. 2, 1 avril 2005 (2005-04-01), pages 311-330, XP055052937, ISSN: 0730-0301, DOI: 10.1145/1061347.1061354 cité dans la demande**

## Description

La présente invention concerne un procédé de traitement de données pour transformer une première surface 3D (3 dimensions), adaptée pour revêtir un premier objet et formée d'un maillage de premières surfaces élémentaires 2D (2 dimensions), en une deuxième surface 3D, adaptée pour revêtir un deuxième objet et formée d'un maillage de deuxièmes surfaces élémentaires 2D.

De tels traitements de donnés sont par exemple utilisés pour, à partir d'un personnage, dit « personnage source », revêtu d'un vêtement, dit « vêtement source », et d'un autre personnage dit « personnage cible », de dimensions différentes du personnage source, déterminer un vêtement, dit « vêtement cible », correspondant au vêtement source, mais adapté aux dimensions du personnage cible, l'ensemble des personnages et vêtements cible/source étant définis par des données numériques.

Dans un processus, notamment manuel, et requérant beaucoup de savoir-faire, les tailleurs adaptent un patron en 2D du vêtement en fonction des changements entre les personnages source et cible au niveau de distances clés : par exemple au niveau des hanches, de la taille, de la longueur des bras etc.

Il existe des systèmes automatiques d'aide à l'adaptation (cf. par exemple MOORE. C., L. MULLET, K. K., and YOUNG, M. B. P. 2001, Concepts of Pattern Grading : Techniques for Manual and Computer Grading, Fairchild Books And Visuals), mais ils ne fournissent que certaines correspondances dans des tables et ne peuvent permettre de s'affranchir du recours au savoir-faire d'un tailleur. En outre, ils ne sont guère adaptés aux personnages virtuels, qui typiquement, ne sont pas conformes aux tables de dimensions de corps standards.

Des techniques dites de « skinning » sont aussi utilisées pour adapter, en 3D, des vêtements réels ou virtuels : cf par exemple WANG. C. C. L., WANG. Y., and YUEN, M. M. F. 2005. Design automation for customized apparel products, Comput. Aided Des. 37, 675-691, ou WANG. C. C. L., C. HUI, K., and M. TONG. K. 2007, Volume parameterization for design automation of customized free-form products, submitted for IEEE Transactions on Automation Science and Engineering 4, 11-21). Cependant, comme indiqué dans MENG. Y., WANG. C. C., and JIN. X. 2012, flexible shape control for automatic resizing of apparel products, Computer-Aided Design 44, 1, 68-76, ces techniques altèrent significativement les formes de vêtements lâches, et dégradent à la fois la conformité au modèle initial et la vraisemblance du vêtement adapté.

Par ailleurs, pour simplifier la création de contenu 3D virtuel, il existe des techniques de transfert et de redimensionnement pour différents types de données, par exemple pour des textures et détails géométriques, des déformations ou encore des animations... Notamment, des techniques de transfert de géométrie et déformation utilisent une notion de préservation de forme (cf. par exemple BEN-CHEN M., WEBER O., and GOTSMAN, C. 2009, Spatial déformation transfer, Eurographics/ ACM SIGGRAPH Symposium on Computer Animation). Pour redimensionner de façon réaliste des modèles d'objets manufacturés, une technique (KRAEVOY. V., SHEFFER. A., COHEN-OR. D., and SHAMIR. A. 2008, Non-homogeneous resizing of complex models, ACMTrans. Graph, 111) minimise les changements des normales de surface. Cette méthode, toutefois, ne donne pas de résultats satisfaisants dans le transfert de vêtements virtuels ou réels, du fait notamment de compromis à prendre en compte entre les contraintes de proportionnalité, vraisemblance et forme.

Il est par conséquent besoin d'une technique, dite de transfert ou de calibration, qui définisse un revêtement qui convienne aux proportions d'un objet de support, par exemple un personnage virtuel ou d'une personne réelle, à partir d'un revêtement initial servant de modèle, qui, lui, est adapté aux proportions d'un autre objet de support, ie un autre personnage virtuel ou personne réelle, et qui soit notamment satisfaisant lorsque le revêtement comporte un vêtement.

L'article de Jituo Li et al "Customizing 3D garments based on volumetric deformation", publié dans COMPUTERS IN INDUSTRY, ELSEVIER SCIENCE PUBLISHERS AMSTERDAM, NL, vol. 62, no. 7, 7 avril 2011, pages 693-707, décrit une approche pour customiser des modèles tridimensionnels pour des vêtements en établissant une correspondance entre deux modèles humains, en faisant un maillage tétraédrique de l'espace autour du modèle humain de référence habillé, et en déformant ces tétraèdres selon la correspondance entre les modèles humains.

L'article de Robert W. Summer et al "Deformation transfer for triangle meshes", publié dans ACM TRANSACTIONS ON GRAPHICS, vol. 23, no. 3, 1 août 2004, page 399, décrit un transfert de déformation d'un maillage en triangle vers un autre maillage en triangle par la résolution d'un problème d'optimisation. En pratique, un utilisateur construit une correspondance entre les triangles de la source et ceux de la cible en spécifiant un ensemble restreint de marqueurs de sommets, et résout le problème pour appliquer la transformation du maillage source au maillage cible. Ainsi, l'animation d'une image d'un cheval peut être transférée à une image d'un chameau pour simuler un mouvement correspondant.

La présente invention est définie par les caractéristiques des revendications indépendantes 1, 12, et 13, les revendications dépendantes 2 à 11 en définissant quant à elles des modes de réalisations particuliers.

Suivant un premier aspect, l'invention propose un procédé du type précité, caractérisé en ce qu'il comprend une étape de traitement itérative selon laquelle on détermine les transformations des premières surfaces élémentaires, en des deuxièmes surfaces élémentaires respectives, mettant en oeuvre de façon itérative les étapes selon lesquelles :

a/ lors d'une (k+1)$^{\text{ème}}$ étape d'itération courante, k étant un entier supérieur ou égal à 0, pour chacun d'une pluralité de couples comprenant une première surface élémentaire et une deuxième surface élémentaire issue d'une transformation de la première surface élémentaire et ayant été obtenue à l'itération précédente k, on détermine la projection de ladite deuxième surface élémentaire sur le plan de ladite première surface élémentaire, et on définit une matrice $T_{k+1}^{t}$ de transformation courante 2D pour ledit couple,

avec $T_{k+1}^{t} = P_{k}^{t'}(P^{t})^{-1}$ et $P^t = [p_{n+1} - p_i]_{i=1\,\text{à}\,n}$, $P_k^{t'} = [p'_{n+1,k} - p'_{i,k}]_{i=1\,\text{à}\,n}$ ;

où $p_{i,}$ pour i=1 à n, sont les sommets de la première surface élémentaire t du couple et $p_{n+1}$ est obtenu par décalage du sommet $p_1$ par un vecteur normal de norme donnée à ladite première surface ;

où $(P^t)^{-1}$ est l'inverse de la matrice $P^t$ quand les premières surfaces élémentaires sont des triangles et est une matrice pseudo-inverse de la matrice $P^t$ sinon. ;

où $p'_{i,k}$, pour i=1 à n, sont les sommets de ladite projection de la deuxième surface élémentaire et $p'_{n+1,k}$ est obtenu par décalage du sommet $p'_{1,k}$ dudit vecteur normal ;

b/ on détermine les deuxièmes surfaces élémentaires obtenues pour la (k+1)$^{\text{ème}}$ itération, en tant que celles minimisant une fonction comportant au moins le terme

$$E_{\text{shape\_k+1}} = \sum_{\tilde{t}_{k+1}\in S} \left\| \widetilde{P}_{k+1}^{t} (P^{t})^{-1} - T_{k+1}^{t} \right\|^{2},$$

où S est un ensemble de deuxièmes surfaces élémentaires $\tilde{t}_{k+1}$ déterminées à l'étape k+1 ; $T_{k+1}^{t}$ sont les matrices de transformation définies à l'étape a/ de la (k+1)$^{\text{ème}}$ itération ;

$$\widetilde{P}_{k+1}^{t} = [\widetilde{p}_{n+1,k+1} - \widetilde{p}_{i,k+1}]_{i=1,..,n} \; ;$$

où $\tilde{p}_{i,k+1}$, pour i=1 à n, sont les sommets de la deuxième surface élémentaire $\tilde{t}_{k+1}$ telle que déterminée à la (k+1)$^{\text{ème}}$ itération et $\tilde{p}_{n+1,k+1}$ est obtenu par décalage du sommet $\tilde{p}_{1,k+1}$ par un vecteur de ladite norme donnée normal à ladite deuxième surface élémentaire $\tilde{t}_{k+1}$.

Un procédé selon l'invention donne des résultats très satisfaisants relativement à des données définissant des vêtements à calibrer en fonction des dimensions des personnages destinés à les porter, mais également à tout type d'élément surfacique destiné à revêtir des structures de dimensions diverses, par exemple une chaussure, un chapeau ou un sac sur un modèle de personnage, ou une enveloppe (en papier, en plastique ou autre) autour d'un objet quelconque à redimensionner.

Dans des modes de réalisation, le procédé suivant l'invention comporte en outre une ou plusieurs des caractéristiques suivantes :

-    le procédé comprend les étapes suivantes mises en oeuvre pour chaque sommet d'une première surface élémentaire lors d'une étape d'initialisation du traitement itératif, afin de définir une deuxième surface élémentaire pour ladite première surface élémentaire, les premier et deuxième objets étant chacun définis par des données définissant des points d'os d'un squelette d'animation d'objet et des points d'enveloppe d'objet, une fonction d'isomorphisme établissant une correspondance entre lesdits points du premier objet et lesdits points du deuxième objet :

i/ on détermine une paire de points pour chaque os d'une pluralité d'os du squelette du premier objet, comportant un premier point déterminé comme étant le point dudit os le plus proche du sommet et comportant un deuxième point déterminé comme étant le point de l'enveloppe du premier objet situé dans le segment joignant le sommet et ledit premier point, et étant le plus proche dudit sommet ;

ii/ on sélectionne parmi lesdites paires déterminées pour des os respectifs, au moins une paire, dite paire de premier et deuxième points de référence pour ledit sommet de la première surface élémentaire, ladite paire sélectionnée correspondant à un minimum d'une fonction comportant comme variables la distance entre ledit sommet de la première surface élémentaire et le deuxième point de référence d'une paire et le produit scalaire entre un vecteur unitaire colinéaire à l'os, et le vecteur joignant ledit sommet et le premier point de la paire ;

iii/ on définit un sommet de la deuxième surface élémentaire en fonction du point résultat de l'application de la fonction d'isomorphisme au deuxième point de référence, ledit point résultat étant ensuite décalé d'un vecteur parallèle à celui rejoignant les deux points résultats de l'application de la fonction d'isomorphisme au premier et au deuxième points de référence, la norme dudit vecteur étant fonction de la norme du vecteur joignant ledit sommet de la première surface et le deuxième point de référence ;

- à l'étape ii/, ladite fonction représentant la norme est égale à $\|p_m, p_i\| \times e^{-\frac{<v_b, v>^2}{\sigma^2}}$ , où σ est une valeur constante, $p_m$ est le deuxième point d'une paire, $p_i$ est ledit sommet de la première surface, $v_b$ est le vecteur unitaire colinéaire à l'os, et le v est le vecteur joignant ledit sommet et le premier point de la paire ;
- à l'étape iii/, le sommet de la deuxième surface est défini comme étant égal à

$$\tilde{p}_m + \|p_m, p_i\| . v_{bm},$$

$p_i$ étant ledit sommet de la première surface élémentaire ;
$\tilde{p}_m$ étant le point résultat de l'application de la fonction d'isomorphisme au deuxième point de référence ;
$v_{bm}$ étant un vecteur unitaire parallèle au segment $[\tilde{p}_b, \tilde{p}_m]$, $\tilde{p}_b$ étant le point résultat de l'application de la fonction d'isomorphisme au premier point de référence ;

- si deux paires de référence sont sélectionnées à l'étape iii, le sommet de la deuxième surface est défini comme étant égal à $w_1 . \tilde{p}_{i1} + w_2 . \tilde{p}_{i2}$,
avec $w_1$ et $w_2$ supérieurs à 0 et $w_1 + w_2 = 1$

$$\tilde{p}_{i1} = \tilde{p}_{m1} + \|p_{m1}, p_i\| . v_{bm1} \text{ et } \tilde{p}_{i2} = \tilde{p}_{m2} + \|p_{m2}, p_i\| . v_{bm2} ;$$

$p_i$ étant ledit sommet de la première surface élémentaire ;
$\tilde{p}_{mn}$ étant le point résultat de l'application de la fonction d'isomorphisme au deuxième point de référence de la $n^{ème}$ paire de référence, n = 1 ou 2 ;
$v_{bmn}$ étant un vecteur unitaire parallèle au segment $[\tilde{p}_{bn}, \tilde{p}_{mn}]$, $\tilde{p}_{bn}$ est le point résultat de l'application de la fonction d'isomorphisme au premier point de référence de la $n^{ème}$ paire de référence ;

- $$w_1 = \frac{\arctan((5*(z-0,5)+\frac{\pi}{2})}{\pi}$$ où z est la coordonnée de la projection du sommet $p_i$ sur le segment reliant les deux points de référence $p_{b1}$ et $p_{b2}$, en considérant $p_{b1}$ comme le point de coordonnée nulle ;

- à l'étape b/, la fonction à minimiser comporte au moins $E_{shape\_k+1} + E_{rl\_k+1}$, avec

$$E_{rl\_k+1} = \sum_{\tilde{t}_{k+1}} \sum_{\tilde{p}_{i,k+1} \in \tilde{t}_{k+1}} \alpha_i (< \tilde{p}_{i,k+1} - \tilde{p}_{i,0}, d_b >^2 + < \tilde{p}_{i,k+1} - \tilde{p}_{i,0}, d_t >^2) ,$$

où T est un ensemble de deuxième surface élémentaire $\tilde{t}_{k+1}$ déterminées à l'itération k+1 ;
chaque $\tilde{p}_{i,0}$ est un sommet de deuxième surface élémentaire défini en iii/ pour un sommet $p_i$ d'une première surface élémentaire ;
$\alpha_i$ est une valeur qui est constante pour les sommets $\tilde{p}_{i,k+1}$ d'une même deuxième surface élémentaire $\tilde{t}_{k+1}$ ;
$d_b$ est le vecteur unitaire colinéaire à l'os pour lequel la paire sélectionnée de premier et deuxième points de référence a été déterminée, et, $d_q$ étant le vecteur unitaire colinéaire à $(p_b, \tilde{p}_{i,0})$, le vecteur unitaire $d_t$ est égal au produit vectoriel des vecteurs $d_b$ et $d_q$ ;

- les valeurs de $\alpha_i$ pour des surfaces élémentaires dans des zones ajustées de la surface sur l'objet sont choisies dans la plage [0,10] ;
- les valeurs de $\alpha_i$ sont choisies dans la plage [10 ; +∞] dans les autres zones de ladite surface ;
- à l'étape b/, la fonction à minimiser comporte au moins $E_{shape\_k+1} + E_{fit\_k+1}$, avec

$$E_{fit\_k+1} = \beta \sum_{\tilde{t}_{k+1} \in F} \sum_{\tilde{p}_{i,k+1} \in \tilde{t}_{k+1}} < \tilde{p}_{i,k+1} - \tilde{p}_{i,0}, d_q >^2$$

où β est une constante

F est un ensemble de deuxième surface élémentaire $\tilde{t}_{k+1}$ déterminées à itération k+1 et situées dans des zones ajustées de la surface sur l'objet, lesdites deuxièmes surfaces élémentaires déterminées comme se trouvant dans F étant alors supprimées de l'ensemble S ;

chaque $\tilde{p}_{i,0}$ est un sommet de deuxième surface élémentaire défini en iii/ pour le sommet $p_i$ d'une première surface élémentaire ;

$d_b$ est le vecteur unitaire colinéaire à l'os pour lequel la paire sélectionnée de premier et deuxième points de référence à été déterminée, et, $d_q$ étant le vecteur unitaire colinéaire à $(p_b, \tilde{p}_{i,0})$, le vecteur unitaire $d_t$ est égal au produit vectoriel des vecteurs $d_b$ et $d_q$ ;

- β est une constante choisie dans [10 ; +∞].

Suivant un deuxième aspect, la présente invention propose un programme d'ordinateur à installer dans un dispositif de traitement de données pour transformer une première surface 3D, adaptée pour revêtir un premier objet et formée d'un maillage de premières surfaces élémentaires 2D, en une deuxième surface 3D, adaptée pour revêtir un deuxième objet et formée d'un maillage de deuxièmes surfaces élémentaires 2D, ledit programme comprenant des instructions pour mettre en oeuvre les étapes d'un procédé selon le premier aspect de l'invention, lors d'une exécution du programme par des moyens de calcul dudit dispositif.

Suivant un troisième aspect, la présente invention propose un dispositif de traitement de données pour transformer une première surface 3D, adaptée pour revêtir un premier objet et formée d'un maillage de premières surfaces élémentaires 2D, en une deuxième surface 3D, adaptée pour revêtir un deuxième objet et formée d'un maillage de deuxièmes surfaces élémentaires 2D, ledit dispositif de traitement étant adapté pour déterminer des transformations des premières surfaces élémentaires en des deuxièmes surfaces élémentaires respectives et comprenant :

- un superviseur adapté pour faire opérer itérativement un ensemble de modules comprenant un premier module de mise à jour et un deuxième module de mise à jour ;
- le premier module de mise à jour adapté pour, lors d'une $(k+1)^{eme}$ opération d'itération, k étant un entier supérieur ou égal à 0, pour chacun d'une pluralité de couples comprenant une première surface élémentaire et une deuxième surface élémentaire issue d'une transformation de la première surface élémentaire et ayant été délivrée par le deuxième module de mise à jour suite à la $k^{eme}$ opération itérative du superviseur, déterminer la projection de ladite deuxième surface élémentaire sur le plan de ladite surface élémentaire respective, et définir une matrice $T_{k+1}^t$ de transformation courante 2D pour ledit couple,

avec $T_{k+1}^t = P_k^{t'}(P^t)^{-1}$ et $P^t = [p_{n+1} - p_i]_{i=1\ à\ n}$, $P_k^{t'} = [p'_{n+1,k} - p'_{i,k}]_{i=1\ à\ n}$ ;

où $p_i$, pour i=1 à n, sont les sommets de la première surface élémentaire t d'un couple et $p_{n+1}$ est obtenu par décalage du sommet $p_1$ par un vecteur normal à ladite première surface, de norme donnée ;

où $(P^t)^{-1}$ est l'inverse de la matrice $P^t$ quand les premières surfaces élémentaires sont des triangles et est une matrice pseudo-inverse de la matrice $P^t$ sinon ;

où $p'_{i,k}$, pour i=1 à n, sont les sommets de ladite projection de la deuxième surface élémentaire et $p'_{n+1,k}$ est obtenu par décalage du sommet $p'_{1,k}$ dudit vecteur normal ;

- le deuxième module de mise à jour adapté pour, lors d'une $(k+1)^{ème}$ opération itération par le superviseur, k étant un entier supérieur ou égal à 0, déterminer les deuxièmes surfaces élémentaires obtenues pour la $(k+1)^{ème}$ itération, en tant que celles minimisant une fonction comportant au moins le terme $\sum_t \left\| \tilde{P}_{k+1}^t (P^t)^{-1} - T_{k+1}^t \right\|^2$, où $T_{k+1}^t$ sont les matrices de transformation définies par le premier module lors de la $(k+1)^{eme}$ opération d'itération par le superviseur ;

avec $\tilde{P}_{k+1}^t = [\tilde{p}_{n+1,k+1} - \tilde{p}_{i,k+1}]_{i=1,...,n}$, où $\tilde{p}_{i,k+1}$, pour i=1 à n, sont les sommets de la deuxième surface élémentaire du couple telle que déterminée à la $(k+1)^{ème}$ itération et $\tilde{p}_{n+1,k+1}$ est obtenu par décalage du sommet $\tilde{p}_{1,k+1}$ par un vecteur normal à ladite deuxième surface, de norme donnée.

Ces caractéristiques et avantages de l'invention apparaîtront à la lecture de la description qui va suivre, donnée uniquement à titre d'exemple, et faite en référence aux dessins annexés, sur lesquels :

- la figure 1 représente un dispositif dans un mode de mise en oeuvre de l'invention ;
- la figure 2 représente des étapes d'un procédé selon l'invention ;
- la figure 3 représente des étapes d'un procédé selon l'invention ;
- la figure 4a représente des personnages source et cible, et un vêtement source dans un mode de réalisation d'un procédé selon l'invention ;
- la figure 4b représente le vêtement cible après la mise en oeuvre de l'étape 202 représentée en figure 3 ;
- la figure 4c représente le vêtement cible final obtenu dans un mode de réalisation de l'invention ;
- la figure 5 représente un même vêtement dont la forme a été adaptée à deux personnes de mensurations différentes.

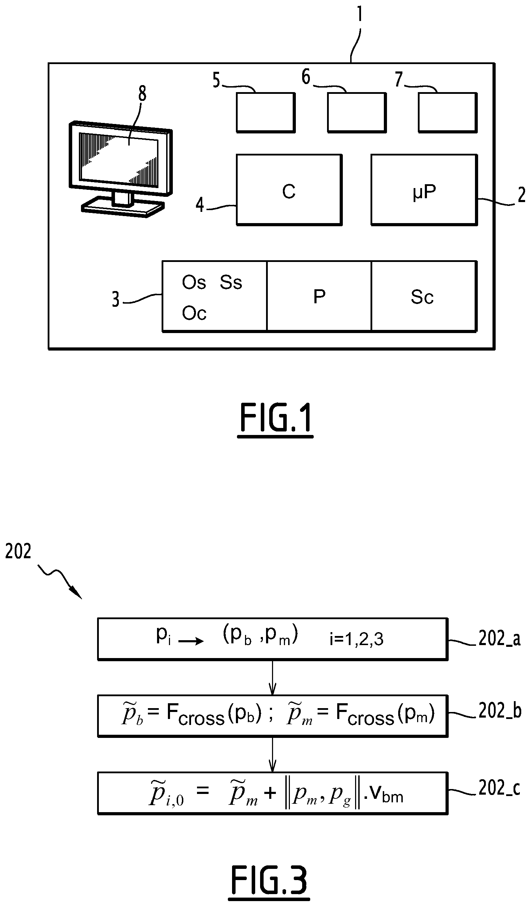

Sur la figure 1 est représenté un dispositif 1 dans un mode de réalisation de l'invention, comprenant un microprocesseur 2, une mémoire 3, un contrôleur 4, un premier module de rangement 5, un deuxième module de traitement 6 et un superviseur 7. Dans un mode de réalisation, il comprend en outre un écran 8 de visualisation.

Le dispositif 1 est adapté pour stocker dans sa mémoire 3, des données de définition d'une surface source 3D, référencée Ss, et d'un objet source 3D, référencé Os, tels que la surface source Sc est adaptée pour « habiller » la surface extérieure de l'objet source Os.

Le dispositif 1 est adapté pour stocker en outre dans sa mémoire 3, des données de définition d'un objet cible 3D, référencé Oc, et une fonction d'isomorphisme $F_{cross}$ permettant de faire la correspondance entre un point de l'objet source Os et un point de l'objet cible Oc, supposée connue (cf. par exemple SHEFFER A., PRAUN E., and ROSE, K. 2006, Mesh parameterization methods and their applications, Found. Trends. Comput. Graph. Vis. 2, 105-171, ou CHANG. Y.-T., CHEN. B.-Y., LUO. W.-C., and HUANG, J.-B, volume parameterization, in Proceedings of Computer Graphics International 2006, 78-89) ou les méthodes consistant à utiliser une déformation du même maillage pour représenter la géométrie des objets source et cible.

La mémoire 3 du dispositif 1 comprend en outre un programme d'ordinateur P, comportant des instructions logicielles qui, lorsqu'elles sont exécutées sur le microprocesseur 2 sous la supervision du contrôleur 4, mettent en oeuvre des étapes décrites ci-dessous.

Le dispositif 1, par la mise en oeuvre de ces étapes, est adapté pour déterminer des données de définition d'une surface cible 3D, référencée Sc, adaptée pour habiller l'objet cible Oc.

Dans le mode de réalisation considéré ci-dessous, les données définissant l'objet source Os sont des données définissant des points du squelette d'animation et des points de la peau d'un premier personnage. Les données définissant l'objet cible Oc sont également des données définissant des points du squelette et de la peau d'un deuxième personnage, dont la morphologie peut être très différente de celle du premier personnage.

Dans le mode de réalisation considéré ci-dessous, la surface source Ss correspond à un vêtement habillant l'objet source Ss et est une surface composée de triangles dits « triangles source » maillés entre eux. Chaque triangle est défini par ses trois sommets.

De même, la surface cible Sc cherchée correspond à un vêtement habillant l'objet cible Sc et est une surface composée de triangles dits « triangles cible » maillés entre eux.

Un équilibre entre différents critères est à prendre en compte pour une opération de transfert satisfaisante, ces critères étant notamment la préservation de la forme du vêtement initial, de la position relative et de l'ajustement entre le vêtement et le personnage, du caractère manufacturable du vêtement, et de non-collision.

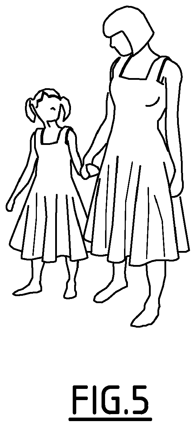

Le critère de préservation de la forme du vêtement initial permet de maintenir le rendu global du vêtement initial. Par exemple, une jupe droite doit rester une jupe droite après transfert, de même pour un jean évasé. En référence à la figure 5 qui représente un même vêtement dont la forme a été adaptée à une mère et à sa fille, des changements importants dans la géométrie, autres qu'une simple mise à l'échelle, sont nécessaires pour s'adapter aux changements de proportions tout en maintenant les directions normales aux différentes sections du vêtement.

La proportionnalité, ou l'augmentation ou réduction de taille, nécessite qu'un vêtement transféré respecte la position relative du vêtement par rapport aux membres et au corps du personnage. Par exemple, une jupe au genou doit rester à longueur du genou indépendamment d'un changement de hauteur du personnage, une ligne de taille d'une robe doit rester au niveau de la taille, et un zip latéral doit rester sur le côté.

Le critère de préservation de l'ajustement reflète le maintien de la distance locale entre le vêtement et le personnage qui le porte. Il peut y avoir concurrence entre ce critère et le critère de préservation de la forme, car cette distance doit parfois être modifiée, notamment dans les zones non serrées (i.e. distances entre le vêtement et le personnage supérieures à un seuil représentant l'épaisseur du tissu), pour préserver la forme.

Les vêtements sont fabriqués à partir de panneaux plans de tissu. Le critère de caractère manufacturable prend en compte que le tissu a une étirabilité limitée.

Enfin, dans l'application à des transferts de vêtements entre des personnages virtuels, il faut veiller à modifier la surface du vêtement afin d'éviter des collisions avec le corps du personnage ou des interpénétrations entre des couches distinctes de vêtement sur le personnage.

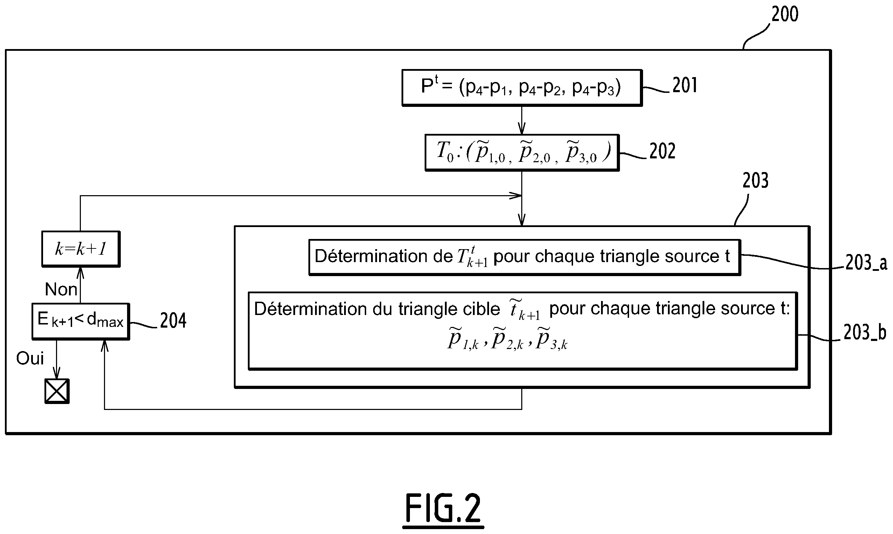

Dans un mode de réalisation, en référence aux figures 1 et 2, les premier et deuxième modules 5,6 et le superviseur 7 sont adaptés pour mettre en oeuvre des étapes décrites ci-dessous à la figure 2, suite à l'exécution d'instructions logicielles du programme P sur le microprocesseur 2.

Dans une opération 200 de transformation dite « transformation autant que possible en 2D », des étapes 201 à 204 sont mises en oeuvre pour la calibration de la surface source Ss à destination de l'objet cible, définissant itérativement une surface cible Sc.

Dans une étape 201, pour chaque triangle t de la surface source Sc, si on nomme $p_1$, $p_2$, $p_3$, les sommets du triangle t, on définit une matrice $P^t$, de taille 3*3, représentant un repère local au triangle t : $P^t = (p_4\text{-}p_1, p_4\text{-}p_2, p_4\text{-}p_3)$, où $p_4 = p_1 + \vec{n}$, et $\vec{n}$ est le vecteur unitaire normal au triangle t. Ce repère représente le triangle t en ce qu'il définit son plan, la longueur de ses trois côtés et les angles que ces côtés font entre eux, mais sans prendre en compte la position du triangle dans l'espace.

Dans une étape 202 d'initialisation T0 (k = 0), on initialise les coordonnées de départ des sommets des triangles de la surface cible Sb, en fonction de la surface source Ss et d'au moins l'objet cible. Il existe un, et un seul, triangle cible $\tilde{t}_0$ pour un triangle source t.

Cette initialisation est optionnellement fonction également de l'objet source.

Un mode de réalisation de cette initialisation est décrit plus bas.

Pour chaque triangle source t, les coordonnées du triangle cible $\tilde{t}_0$ lui correspondant à l'initialisation sont $\tilde{p}_{1,0}$, $\tilde{p}_{2,0}$ et $\tilde{p}_{3,0}$.

Dans une étape 203 itérative, on va chercher à modifier aussi peu que possible la normale d'un triangle cible $\tilde{t}$ (le triangle $\tilde{t}$ est le résultat de la transformation du triangle t) par rapport à la normale du triangle source t lui correspondant, par la minimisation de la formule suivante :

$$E_{shape} = \sum_{t} \left\| \tilde{P}^{t}(P^{t})^{-1} - T^{t} \right\|_{F}^{2} \qquad \text{(Form 1)}$$

où $\|.\|_F$ est une norme de matrice, par exemple la norme de Frobenius ; la $\text{somme} = \sum_{t}$ porte sur chaque triangle t de la surface source Ss.

$\tilde{P}t$ est la matrice 3*3 égale à $[\tilde{p}_4 - \tilde{p}_1, \tilde{p}_4 - \tilde{p}_2, \tilde{p}_4 - \tilde{p}_3]$, où $\tilde{p}_1$, $\tilde{p}_2$, $\tilde{p}_3$ sont les sommets du triangle cible $\tilde{t}$ issus de la transformation du triangle source t lui correspondant, et $\tilde{p}_4 = \tilde{p}_1 + \vec{n}$, et $\vec{n}$ est le vecteur unitaire normal au triangle cible $\tilde{t}$ ; $\tilde{P}t$ représente le repère local obtenu après la transformation du triangle t en $\tilde{t}$ ;

$(P^t)^{-1}$ est la matrice inverse de $\tilde{P}t$ ;

$\tilde{P}(P^t)^{-1}$ représente la transformation entre le triangle source t et le triangle cible $\tilde{t}$ correspondant ; et

$T^t$ est une transformation correspondante qui est contrainte à être une transformation en 2D, dans le plan du triangle t.

Pour résoudre ce problème de minimisation, une technique itérative des moindres carrés est utilisée, qui alterne entre la mise à jour de chaque transformation $T^t$, en gardant $\tilde{P}t$ fixé, et la mise à jour de $\tilde{P}t$ en considérant fixée cette fois les transformations $T^t$. La valeur obtenue pour la formule Form décroît entre deux itérations successives, ce qui assure la convergence de l'étape 203.

L'étape 203 comprend les sous-étapes 203_a et 203_b mises en oeuvre lors d'une (k+1)ème itération, avec k entier supérieur ou égal à 0.

On nomme $\tilde{p}_{1,k}$, $\tilde{p}_{2,k}$, $\tilde{p}_{3,k}$ les sommets du triangle cible $\tilde{t}_k$ issus de la transformation du triangle t tels que déterminés à la kème itération de l'étape 203.

Il existe un triangle cible $\tilde{t}_k$ pour chaque triangle source t.

Cette transformation est définie par la matrice $\tilde{P}_{k}^{t}(P^{t})^{-1}$, où $\tilde{P}_{k}^{t} = [\tilde{p}_{4,k} - \tilde{p}_{1,k}, \tilde{p}_{4,k} - \tilde{p}_{2,k}, \tilde{p}_{4,k} - \tilde{p}_{3,k}]$, où $\tilde{p}_{4,k} = p_{1,k} + \vec{n}_k$ et $\vec{n}_k$ est le vecteur unitaire normal au triangle cible $\tilde{t}_k$ déterminé à la kème itération.

Une matrice de transformation correspondante 2D $T_{k}^{t}$ a également été déterminée pour chaque triangle t à l'issue de la kème itération de l'étape 203.

Lors d'une étape d'itération courante k+1, au cours de la sous-étape 203_a mise en oeuvre par le premier module du dispositif 1, la matrice de transformation correspondante 2D $T_{k+1}^{t}$ déterminée pour chaque triangle source t.

A cette fin, on réalise la projection de chaque triangle cible $\tilde{t}_k$ déterminé à l'itération k sur le plan du triangle source t correspondant :

p'$_{i,k+1}$ = $\tilde{p}_{i,k}$ - < $\tilde{p}_{i,k}$, $\vec{n}^t$ > $\vec{n}^t$ où $\vec{n}^t$ est le vecteur unitaire normal au triangle t, où la fonction <.,.> représente le produit scalaire et i = 1 à 3.

Le repère local issu de cette projection est $P''^t_k = [\, p'_{4,k} - p'_{1,k}\, ,\, p'_{4,k} - p'_{2,k}\, ,\, p'_{4,k} - p'_{3,k}\, ]$, où $p'_{4,k} = p'_{1,k}$ + $\vec{n}$, et $\vec{n}$ est le vecteur unitaire normal au triangle source t.

On détermine alors la matrice de transformation correspondante 2D $T^t_{k+1}$ pour le triangle t :

$$T^t_{k+1} = P''^t_k \, (P^t)^{-1}.$$

Lors de l'itération courante k+1, de la sous-étape 203_b mise en oeuvre par le deuxième module, sur la base des matrices $T^t_{k+1}$ ainsi déterminées pour les triangles sources t, on met à jour le triangle cible pour chaque triangle source t.

A cette fin, on détermine les triangles cibles $\tilde{t}_{k+1}$ permettant la minimisation du terme suivant, issu de la formule (Form 1) :

$$\mathsf{E}_{k+1} = \mathsf{E}_{shape\_k+1} = \sum_t \left\| \, \tilde{P}^t_{k+1} (P^t)^{-1} - T^t_{k+1} \, \right\|^2 \qquad (\text{Form } 1_{k+1})$$

où $\tilde{P}^t_{k+1} = [\, \tilde{p}_{4,k+1} - \tilde{p}_{1,k+1}\, ,\, \tilde{p}_{4,k+1} - \tilde{p}_{2,k+1}\, ,\, \tilde{p}_{4,k+1} - \tilde{p}_{3,k+1}\, ]$, où $\tilde{p}_{4,k+1} = \tilde{p}_{1,k+1} + \vec{\tilde{n}}_{k+1}$, $\vec{\tilde{n}}_{k+1}$ étant le vecteur unitaire normal au triangle cible $\tilde{t}_{k+1}$. Cette somme $\sum_t$ porte sur tous les triangles t de la surface source (ou encore tous les triangles cibles, chaque triangle cible correspondant à un triangle source), ou uniquement sur ceux vérifiant une condition donnée, comme indiqué plus loin.

Les matrices $T^t_{k+1}$ étant connues, la détermination des sommets $\tilde{p}_{1,k+1}$, $\tilde{p}_{2,k+1}$, $\tilde{p}_{3,k+1}$ des triangles cibles $\tilde{t}_{k+1}$ t minimisant l'équation quadratique (Form 1$_{k+1}$) se réduit à la résolution d'un simple système linéaire.

Dans un mode de réalisation, puisque les positions des sommets du triangle cible déterminé pour chaque triangle source ne varient pas significativement d'une itération à l'autre, on utilise une résolution de type gradient conjugué, avec les positions déterminées à l'itération k comme conditions initiales.

Dans une étape 204 mise en oeuvre par le superviseur 7, une condition d'arrêt des itérations est vérifiée : si la valeur obtenue pour le terme $\mathsf{E}_{k+1}$ est inférieure à un seuil fixé $d_{max}$, les itérations sont stoppées, la surface cible Sc finale considérée étant alors celle constituée par le maillage des triangles cibles $\tilde{t}_{k+1}$. Sinon, une nouvelle itération de l'étape 203 est mise en oeuvre.

Une telle opération 200 permet de conserver au mieux la forme du vêtement lors de sont transfert entre les personnages, ainsi que son caractère manufacturable.

Dans un mode de réalisation, l'étape 202 d'initialisation est réalisée de la manière décrite ci-dessous, en référence à la figure 3, et peut être considérée comme une extension d'un processus de type "smooth skinning", dans lequel les combinaisons de positions constantes dans les références du squelette seraient remplacées par des combinaisons de vecteurs de décalage constants définis à partir d'un ensemble de points de référence choisis de façon adéquate sur l'objet source Os.

Ainsi chaque sommet $p_i$ d'un triangle t de la surface source Ss va être associé à une paire de points de référence ($p_b$, $p_m$) situés respectivement sur un os du squelette et sur la peau du personnage source.

Il a été déterminé par la demanderesse que sélectionner le point sur la peau le plus proche du sommet $p_i$, comme suggéré par CORDIER. F., SEO. H., and MAGNENAT-THALMANN, N. 2003, Made-to-measure technologies for an online clothing store, IEEE Computer Graphics and Applications 23, 38-48 ; ou MENG. Y., WANG. C. C., and JIN. X. 2012, Flexible shape control for automatic resizing of apparel products, Computer-Aided Design 44, 1, 68-76, n'est pas nécessairement le meilleur choix, car cela occasionne des phénomènes de glissement du vêtement le long du corps du personnage cible.

Selon l'invention, dans cette étape 202 d'initialisation, les paires de points de référence choisies correspondent à des minima locaux d'une fonction exprimant la distance au personnage source qui privilégie les directions perpendiculaires à l'os local.

Ainsi dans une sous-étape 202_a, pour chaque sommet $p_i$, on détermine le(s) point(s) $p_{bj}$ le(s) plus proche(s) de $p_i$ sur chaque os j (j = 1 à J) du squelette de l'objet source (on notera que $p_b$ peut être une extrémité d'un os).

Pour chaque os j, on définit $p_{mj}$ comme étant le point de la peau du personnage source le plus proche du sommet et situé sur le segment $[p_{bj}, p_i]$. Un tel point $p_{mj}$ existe forcément, puisque $p_{bj}$ est à l'intérieur, et que $p_i$ est à l'extérieur, de la peau du personnage source.

Pour sélectionner une paire de points de référence pour un sommet $p_g$, on considère à la fois la distance entre $p_i$ et chacune des intersections $p_{mj}$ (j = 1 à J) et également l'angle entre l'axe de l'os $v_{bj}$ et le vecteur $v=p_i-p_{bj}$, car il est préféré que ces deux vecteurs soient perpendiculaires.

Ainsi, une paire $(p_b, p_m)$ parmi les paires $(p_{bj}, p_{mj})$ est ainsi sélectionnée comme référence pour le sommet $p_i$ si elle minimise la formule suivante : $\left\| p_{mj}, p_i \right\| \times e^{\frac{<v_{bj}, v>^2}{\sigma^2}}$ , où $\sigma$ est une valeur constante, par exemple égale à 0,1.

Dans la plupart des cas, un seul minimum existe. Lorsqu'il existe deux solutions donnant un minimum égal ou très proche, les deux paires correspondantes sont associée au sommet $p_i$ : c'est typiquement le cas dans les zones entre les jambes du personnage ou sous les bras.

En outre, pour chaque paire $(p_b, p_m)$ sélectionnée comme référence pour le sommet $p_i$, on associe en outre le décalage $o_i = \left\| p_m, p_i \right\|$ au sommet $p_i$.

On notera que dans d'autres modes de réalisation, la formule à minimiser prend d'autres formes, par exemple également fonction de $\left\| p_{mj}, p_i \right\|$ et du produit scalaire $\langle v_{bj}, v \rangle$.

Dans une sous-étape 202_b, pour chaque paire de points de référence $(p_b, p_m)$ ainsi sélectionnée pour un sommet $p_i$, on détermine la paire de points de référence correspondante $(\tilde{p}_b, \tilde{p}_m)$ sur l'objet cible Oc en appliquant la fonction d'isomorphisme $F_{cross}$ :

$$\tilde{p}_b = F_{cross}(p_b) \text{ et } \tilde{p}_m = F_{cross}(p_m) \qquad \text{(Eq 1)}$$

Puis, dans une sous-étape 202_c, on définit un sommet $\tilde{p}_{i,0}$ de la surface cible Sc pour chaque sommet $p_i$ de la surface source Ss, qui sera considéré ensuite lors de l'étape d'initialisation 202 comme un sommet du triangle cible $\tilde{t}_0$ correspondant au triangle source t :

pour chaque sommet $p_i$ d'un triangle t de la surface source auquel est associée une seule paire de points de référence $(p_b, p_m)$, on définit $\tilde{p}_{i,0}$ :

$$\tilde{p}_{i,0} = \tilde{p}_m + o_i.v_{bm}, \qquad \text{(Eq 2)}$$

où $v_{bm}$ est un vecteur unitaire parallèle au segment $[\tilde{p}_b, \tilde{p}_m]$.

Pour chaque sommet $p_i$ d'un triangle t de la surface source auquel sont associées deux paires de points de référence $(p_{b1}, p_{m1})$ et $(p_{b2}, p_{m2})$, on obtient, à l'aide de des équations (Eq 1) et (Eq 2) appliquées successivement à chacune des deux paires, $\tilde{p}_{i,0,1}$ et $\tilde{p}_{i,0,2}$($\tilde{p}_{i,0,n} = F_{cross}(p_{m,n}) + \left\| p_{m,n}, p_i \right\| v_{bm}$ où $v_{bm}$ est un vecteur unitaire parallèle au segment $[F_{cross}(p_{bn}), F_{cross}(p_{mn})]$, et n = 1 à 2) ;

on définit $\tilde{p}_{g,0}$ à l'aide d'une somme pondérée de $\tilde{p}_{i,s,1}$ et $\tilde{p}_{i,0,2}$ :

$$\tilde{p}_{i,0} = w_1.\tilde{p}_{i,0,1} + w_2.\tilde{p}_{i,0,2} \ ,$$

$$w_1 = \frac{\arctan((5*(z-0,5))+\frac{\pi}{2})}{\pi}$$

avec où z est la coordonnée de la projection du sommet $p_i$ sur le segment reliant les deux points de référence $p_{b1}$ et $p_{b2}$, en considérant $p_{b1}$ comme le point de coordonnée nulle ;

et $w_2 = 1 - w_1$.

Une telle étape 202 permet de générer une version qui se base sur une mise à l'échelle proportionnelle à partir de la surface source, et qui satisfait les critères de préservation d'ajustement et de position relative (le critère de préservation de la forme étant lui pris en compte dans l'étape 203).

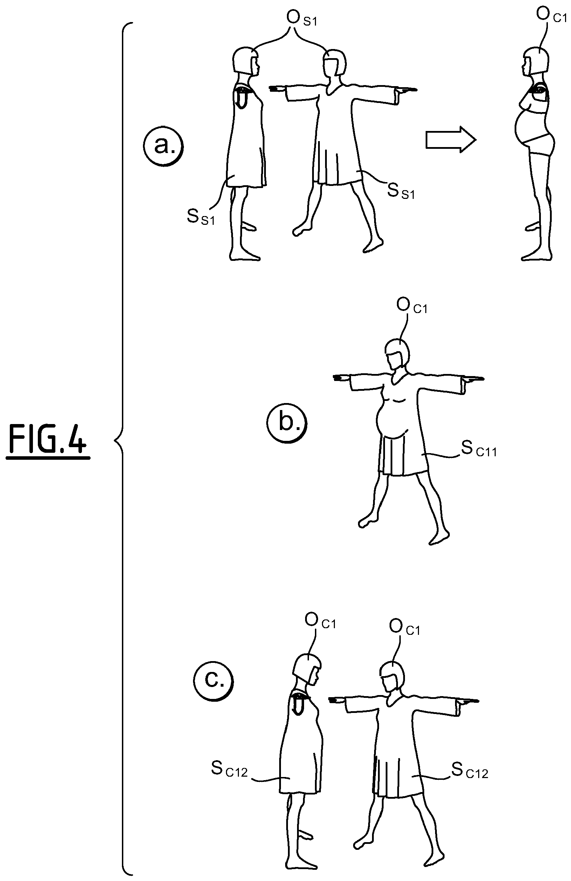

A titre d'illustration, sur la figure 4a, un personnage, objet source $O_{S1}$, revêtu d'un vêtement $S_{S1}$, ainsi qu'un personnage $O_{C1}$, objet cible sont représentés.

Sur la figure 4b, le personnage $O_{C1}$, objet cible, a été représenté revêtu du vêtement cible $S_{C11}$ obtenu après mise en oeuvre de l'étape 202 détaillée ci-dessus en référence à la figure 3. Les bordures du vêtement et autres zones caractéristiques ont bien gardé leur position relative par rapport au corps et aux membres du personnage qui le porte, tandis que l'utilisation des décalages $o_i$ préserve l'ajustement, en prenant en compte les changements dans la forme des corps des personnages.

Sur la figure 4c, le personnage $O_{C1}$, objet cible, a été représenté revêtu du vêtement cible $S_{C12}$ obtenu après mise en oeuvre de l'étape 200, en prenant comme vêtement cible d'initialisation le vêtement cible $S_{C11}$.

Dans un mode de réalisation, on prend en compte dans l'étape 203 pour la (k+1) ème itération, outre le critère de préservation de la forme, le critère de préservation de la position relative et/ou de l'ajustement.

Pour ce faire, on considère un repère local défini par la relation entre chaque sommet d'initialisation $\tilde{p}_{i,0}$ déterminé pour un sommet $p_i$ d'un triangle $t$ de la surface source $S_s$ et le point de référence $p_b$, sur le squelette, déterminé pour le sommet $p_i$ (cf. étapes 202_a à 202_c). Ce repère comprend le vecteur unitaire $d_b$ parallèle à l'os correspondant à la paire de points de référence sélectionnée à la sous-étape 202_a, le vecteur unitaire $d_q$ colinéaire à $(p_b, \tilde{p}_{i,0})$, et le vecteur unitaire $d_t$ égal au produit vectoriel des vecteurs $d_b$ et $d_q$ (par construction $d_q$ est orthogonal à $d_b$).

Pour mieux prendre en compte la préservation de la position relative, à l'étape 203_b de la (k+1)ème itération, on considère le terme $E_{rl\_k+1}$ correspondant à une somme de deux termes déterminés pour tous les triangles cibles $t_{k+1}$ :

$$E_{rl\_k+1} = \sum_{\tilde{t}_{k+1}} \sum_{\tilde{p}_{i,k+1}\in\tilde{t}_{k+1}} \alpha_i (<\tilde{p}_{i,k+1} - \tilde{p}_{i,0}, d_b>^2 + <\tilde{p}_{i,k+1} - \tilde{p}_{i,0}, d_t>^2) \quad \text{(Form 2}_{k+1})$$

Les deux termes de cette somme ont pour but d'empêcher le vêtement de glisser ou de tourner sur le squelette lors du transfert. Pour des sommets intérieurs (par opposition à ceux placés sur le bord d'une partie du vêtement) situés dans des régions lâches, une valeur faible est utilisée pour $\alpha_i$ (par exemple choisie dans l'intervalle $]0,10]$, et égale dans un mode de réalisation à 0,5), favorisant la préservation de la forme aux dépens d'imprécisions mineures dans la préservation des positions relatives. Le long de frontières et de coutures du vêtement (où toute torsion ou déplacement du vêtement serait vraiment mis en évidence), de même que dans les régions serrées, une valeur élevée est utilisée pour $\alpha_i$ (par exemple choisie dans l'intervalle $[10, +\infty]$, et égale dans un mode de réalisation à 1000).

Etant donné que la préservation de la position relative n'impose aucune contrainte sur la distance entre le corps du personnage et le tissu, dans un mode de réalisation, on ne fixe pas de contrainte relative à la composante de $\tilde{p}_{i,k+1} - \tilde{p}_{i,0}$ alignée avec $d_q$.

Dans un mode de réalisation, pour mieux prendre en compte l'ajustement dans les régions serrées, le terme de localisation relative est augmenté avec un terme d'ajustement $E_{fit\_k+1}$, contraignant explicitement la distance correspondante :

$$E_{fit\_k+1} = \beta \sum_{\tilde{t}_{k+1}\in F} \sum_{\tilde{p}_{i,k+1}\in\tilde{t}_{k+1}} <\tilde{p}_{i,k+1} - \tilde{p}_{i,0}, d_q>^2 \quad \text{(Form 3}_{k+1})$$

où l'ensemble $F$ comporte les triangles cibles situés dans les régions serrées (ou encore les triangles cibles correspondant chacun à un triangle source situé dans une région serrée) ; et

où la valeur constante de $\beta$ est choisie dans l'intervalle $[10, +\infty]$, et est par exemple dans un mode de réalisation égale à 1000.

Ainsi dans un mode de réalisation, à l'étape 203_b, pour déterminer les triangles cibles $\tilde{t}_{k+1}$, à la place de minimiser $E_{shape\_k+1}$, on minimisera $E_{k+1} = E_{shape\_k+1} + E_{rl\_k+1} + E_{fit\_k+1}$ (ou alors si seul l'un des deux critères supplémentaires est pris en compte, on minimisera $E_{k+1} = E_{shape\_k+1} + E_{rl\_k+1}$).

Dans le cas où on prend en compte $E_{fit\_k+1}$ dans $E_{k+1}$, on ne prend pas en compte les triangles éléments de l'ensemble $F$ dans les termes de $E_{shape\_k+1}$ parce que dans ce cas, il n'y a pas de raison de préserver les normales à ces triangles.

Etant donné le degré de liberté procuré par la variation de la distance au corps du personnage objet cible, il est ainsi possible de préserver simultanément la forme et la localisation relative dans les régions ajustées.

Dans un mode de réalisation, les triangles sources identifiés comme faisant partie d'une région serrée du vêtement source sont sélectionnés comme ceux séparés d'une distance au corps qui est inférieure à un seuil donné. Ce critère peut être problématique quand le courbe du corps croît de manière significative entre les personnages source et cible. Dans ce cas, préserver l'aspect serré peut augmenter la courbe gaussienne du vêtement rendant la fabrication du vêtement improbable. Dans un autre mode de réalisation, une technique de relâchement sélectif est mise en oeuvre, relâchant l'ajustement dans des zones où la normale aux points de vêtement source pointe vers le bas ou latéralement. Est alors élément de l'ensemble F tout triangle cible tel que tous les sommets du triangle source correspondant sont situés en-deçà d'une distance seuil déterminée du corps du personnage source, la normale du triangle source pointant vers le haut du personnage.

Dans un mode de réalisation, afin d'empêcher des collisions entre le vêtement cible déterminé itérativement à l'étape 203 et le corps du personnage cible, on impose en outre que le produit scalaire des vecteurs $\tilde{p}_{i,k+1} - p_m$ et $d_q$ soit supérieur à une valeur minimale fixée $\varepsilon$ (typiquement, on prend pour $\varepsilon$ la plus petite distance entre le vêtement source et la peau du personnage source, égale en général à l'épaisseur supposée du tissu), soit $< \tilde{p}_{i,k+1} - p_m, d_q > \geq \varepsilon$, ce qui revient à imposer que le vêtement cible doit être plus loin de l'os que la peau du personnage cible.

Pour cela, on cherche d'abord à l'étape 203_b pour l'itération k+1, les sommets minimisant $E_{k+1}$ sans tenir compte de cette contrainte Puis on identifie les collisions.

Pour identifier ces collisions, on détermine l'intersection des segments $\tilde{p}_{i,k+1} - p_b$ avec le personnage cible et on réalise un test en comparant les distances squelette cible/vêtement cible courant avec les distances squelette cible/personnage cible. Pour cela, on reprojette le point du vêtement sur l'os associé ce qui donne une nouvelle valeur au point $p_b$, et on recalcule le point de la peau $p_m$ comme étant l'intersection entre la droite qui porte $\tilde{p}_{i,k+1} - p_b$ et la peau. La comparaison entre la distance $(p_b, p_m)$ et la distance $(\tilde{p}_{i,k+1}, p_b)$ permet de savoir si $\tilde{p}_{i,k+1}$ a pénétré sous la peau. En cas de pénétration du sommet $\tilde{p}_{i,k+1}$, on recalcule le sommet $\tilde{p}_{i,0}$ en projetant ce sommet à la distance $\varepsilon$ définie ci-dessus du point $p_m$ du personnage cible le long du segment $\tilde{p}_{i,k+1} - p_b$, et on ajoute le triangle le plus haut adjacent à ce sommet $\tilde{p}_{i,0}$ recalculé à l'ensemble F, traitant ce triangle comme un triangle de zones serrées dans les calculs qui suivent. On répète alors l'optimisation (étape 202). Le traitement des collisions (étape 203) est itéré tant que des collisions subsistent.

Dans un mode de réalisation, le personnage source comporte plusieurs couches superposées de vêtements source, à adapter pour revêtir un personnage cible. Dans un tel cas, chaque vêtement source est adapté au personnage cible successivement, en débutant par le vêtement source le plus proche du corps du personnage source. A chaque stade, les couches de vêtements déjà adaptées sont considérées comme faisant partie du corps des personnages source/cible.

Pour obtenir un patron 2D correspondant à un vêtement adapté à un personnage cible selon l'invention, ce dernier est découpé sur le vêtement cible le long des coutures indiquées sur le vêtement source (de manière à disposer des mêmes bords pour les patrons). Un procédé de paramétrisation est ensuite utilisé pour mettre chaque partie du vêtement à plat (par exemple on peut utiliser ABF ++ , cf. SHEFFER. A., LEVY. B., MOGILNITSKY. M., and BOGOMYAKOV. A. 2005, Abf++: fast and robust angle based flattening, ACM Trans. Graph. 24 (April), 311-330).

Les surfaces source et cible Ss et Sc considérées ci-dessus sont définies par des triangles maillés. Il va de soi que l'invention peut être mise en oeuvre sur la base de surfaces définies par un maillage de surfaces élémentaires planes comprenant tous types de polygones plans.

Lorsque les surfaces élémentaires ne sont pas des triangles, $(P^t)^{-1}$ est pseudo-inverse de la matrice $P^t$.

Les étapes et critères décrits ci-dessus selon l'invention sont relatifs aux opérations de définition d'un vêtement adapté à des dimensions d'un personnage cible à partir d'un vêtement servant de modèle adapté à un personnage source. Ils sont bien sûr tout à fait transposables à des opérations de transfert d'une surface recouvrant un objet source vers un objet cible de dimensions autres que l'objet source, les surfaces et objets étant de nature quelconque, par exemple autres que des habits sur des personnages. Les points de la peau sont alors remplacés par les points du maillage de l'objet et les points du squelette d'animation par les points d'un squelette interne au maillage de l'objet, par exemple type axe médian.

Un procédé selon l'invention permet des redimensionnements très vraisemblables, tout en évitant la nécessité d'intervention de l'utilisateur (processus automatique).

## Revendications

1. Procédé de traitement de données pour transformer une première surface 3D ($S_S$) adaptée pour revêtir un premier objet ($O_S$) et formée d'un maillage de premières surfaces élémentaires 2D en une deuxième surface 3D ($S_C$) adaptée pour revêtir un deuxième objet ($O_C$) et formée d'un maillage de deuxièmes surfaces élémentaires 2D, ledit procédé étant **caractérisé en ce qu'**il comprend une étape de traitement itérative selon laquelle on détermine les transformations des premières surfaces élémentaires, en des deuxièmes surfaces élémentaires respectives, mettant en oeuvre de façon itérative les étapes selon lesquelles :

   a/ lors d'une (k+1)ème étape d'itération courante, k étant un entier supérieur ou égal à 0, pour chacun d'une pluralité de couples comprenant une première surface élémentaire et une deuxième surface élémentaire issue d'une transformation de la première surface élémentaire et ayant été obtenue à l'itération précédente k, on détermine la projection de ladite deuxième surface élémentaire sur le plan de ladite première surface élémentaire, et on définit une matrice $T_{k+1}^{t}$ de transformation courante 2D pour ledit couple,

avec $T_{k+1}^{t} = P_k^{t'}(P^t)^{-1}$ et $P^t = [p_{n+1} - p_i]_{i=1 \text{ à } n}$, $P_k^{t'} = [p'_{n+1,k} - P'_{i,k}]_{i=1 \text{ à } n}$ ;

où $p_i$, pour i=1 à n, sont les sommets de la première surface élémentaire t du couple et $p_{n+1}$ est obtenu par décalage du sommet $p_1$ par un vecteur normal de norme donnée à ladite première surface ;

où $(P^t)^{-1}$ est l'inverse de la matrice $P^t$ quand les premières surfaces élémentaires sont des triangles et est une matrice pseudo-inverse de la matrice $P^t$ sinon ;

où $p'_{i,k}$, pour i=1 à n, sont les sommets de ladite projection de la deuxième surface élémentaire et $p'_{n+1,k}$ est obtenu par décalage du sommet $p'_{1,k}$ dudit vecteur normal ;

b/ on détermine les deuxièmes surfaces élémentaires obtenues pour la $(k+1)^{ème}$ itération, en tant que celles minimisant une fonction comportant au moins le terme

$$E_{\text{shape\_k+1}} = \sum_{\tilde{t}_{k+1} \in S} \left\| \tilde{P}_{k+1}^{t}(P^t)^{-1} - T_{k+1}^{t} \right\|^2 ,$$

où S est un ensemble de deuxièmes surfaces élémentaires $\tilde{t}_{k+1}$ déterminées à l'étape k+1 ;

$T_{k+1}^{t}$ sont les matrices de transformation définies à l'étape a/ de la $(k+1)^{ème}$ itération ;

$$\tilde{P}_{k+1}^{t} = [\tilde{p}_{n+1,k+1} - \tilde{p}_{i,k+1}]_{i=1,..,n} ;$$

où $\tilde{p}_{i,k+1}$, pour i=1 à n, sont les sommets de la deuxième surface élémentaire $\tilde{t}_{k+1}$ telle que déterminée à la $(k+1)^{ème}$ itération et $\tilde{p}_{n+1,k+1}$ est obtenu par décalage du sommet $\tilde{p}_{1,k+1}$ par un vecteur de ladite norme donnée normal à ladite deuxième surface élémentaire $\tilde{t}_{k+1}$,

la minimisation étant réalisée en utilisant une technique itérative qui alterne entre la mise à jour de chaque matrice $T^t$ de transformation en fixant la matrice $\tilde{P}^t$ et la mise à jour de matrice $\tilde{P}^t$ en fixant les matrices $T^t$ de transformation.

2. Procédé de traitement de données selon la revendication 1, comprenant les étapes suivantes mises en oeuvre pour chaque sommet d'une première surface élémentaire lors d'une étape d'initialisation du traitement itératif, afin de définir une deuxième surface ($S_C$) élémentaire pour ladite première surface élémentaire ($S_S$), les premier et deuxième objets étant chacun définis par des données définissant des points d'os d'un squelette d'animation d'objet et des points d'enveloppe d'objet, une fonction d'isomorphisme établissant une correspondance entre lesdits points du premier objet et lesdits points du deuxième objet :

i/ on détermine une paire de points pour chaque os d'une pluralité d'os du squelette du premier objet, comportant un premier point déterminé comme étant le point dudit os le plus proche du sommet et comportant un deuxième point déterminé comme étant le point de l'enveloppe du premier objet situé dans le segment joignant le sommet et ledit premier point, et étant le plus proche dudit sommet ;

ii/ on sélectionne parmi lesdites paires déterminées pour des os respectifs, au moins une paire, dite paire de premier et deuxième points de référence pour ledit sommet de la première surface élémentaire, ladite paire sélectionnée correspondant à un minimum d'une fonction comportant comme variables la distance entre ledit sommet de la première surface élémentaire et le deuxième point de référence d'une paire et le produit scalaire entre un vecteur unitaire colinéaire à l'os, et le vecteur joignant ledit sommet et le premier point de la paire ;

iii/ on définit un sommet de la deuxième surface élémentaire en fonction du point résultat de l'application de la fonction d'isomorphisme au deuxième point de référence, ledit point résultat étant ensuite décalé d'un vecteur parallèle à celui rejoignant les deux points résultats de l'application de la fonction d'isomorphisme au premier et au deuxième points de référence, la norme dudit vecteur étant fonction de la norme du vecteur joignant ledit sommet de la première surface et le deuxième point de référence.

3. Procédé de traitement de données selon la revendication 2, selon lequel à l'étape ii/, ladite fonction représentant la norme est égale à $\left\|p_m, p_i\right\| \times e^{-\frac{<v_b, v>^2}{\sigma^2}}$ , où σ est une valeur constante, $p_m$ est le deuxième point d'une paire, $p_i$ est ledit sommet de la première surface, $v_b$ est le vecteur unitaire colinéaire à l'os, et le v est le vecteur joignant ledit sommet et le premier point de la paire.

4. Procédé de traitement de données selon la revendication 2 ou 3, selon lequel à l'étape iii/, le sommet de la deuxième surface est défini comme étant égal à $\tilde{p}_m + \left\|p_m, p_i\right\| \cdot v_{bm}$,

   $p_i$ étant ledit sommet de la première surface élémentaire ;
   $\tilde{p}_m$ étant le point résultat de l'application de la fonction d'isomorphisme au deuxième point de référence ;
   $v_{bm}$ étant un vecteur unitaire parallèle au segment $[\tilde{p}_b, \tilde{p}_m]$, $\tilde{p}_b$ étant le point résultat de l'application de la fonction d'isomorphisme au premier point de référence.

5. Procédé de traitement de données selon l'une quelconque des revendications 2 à 4, selon lequel si deux paires de référence sont sélectionnées à l'étape iii, le sommet de la deuxième surface est défini comme étant égal à $w_1 \cdot \tilde{p}_{i1} + w_2 \cdot \tilde{p}_{i2}$,
   avec $w_1$ et $w_2$ supérieurs à 0 et $w_1 + w_2 = 1$

   $$\tilde{p}_{i1} = \tilde{p}_{m1} + \left\|p_{m1}, p_i\right\| \cdot v_{bm1} \quad \text{et} \quad \tilde{p}_{i2} = \tilde{p}_{m2} + \left\|p_{m2}, p_i\right\| \cdot v_{bm2} ;$$

   $p_i$ étant ledit sommet de la première surface élémentaire ;
   $\tilde{p}_{mn}$ étant le point résultat de l'application de la fonction d'isomorphisme au deuxième point de référence de la $n^{ème}$ paire de référence, n = 1 ou 2 ;
   $V_{bmn}$ étant un vecteur unitaire parallèle au segment $[\tilde{p}_{bn}, \tilde{p}_{mn}]$, $\tilde{p}_{bn}$ est le point résultat de l'application de la fonction d'isomorphisme au premier point de référence de la $n^{ème}$ paire de référence.

6. Procédé de traitement de données selon la revendication 5, selon lequel $w_1 = \dfrac{\arctan((5*(z-0,5)+\frac{\pi}{2})}{\pi}$ où z est la coordonnée de la projection du sommet $p_i$ sur le segment reliant les deux points de référence $p_{b1}$ et $p_{b2}$, en considérant $p_{b1}$ comme le point de coordonnée nulle.

7. Procédé de traitement de données selon la revendication 2 et l'une quelconque des revendications 1 à 6, selon lequel à l'étape b/, la fonction à minimiser comporte au moins $E_{shape\_k+1} + E_{rl\_k+1}$, avec

   $$E_{rl\_k+1} = \sum_{\tilde{t}_{k+1}} \sum_{\tilde{p}_{i,k+1} \in \tilde{t}_{k+1}} \alpha_i (< \tilde{p}_{i,k+1} - \tilde{p}_{i,0}, d_b >^2 + < \tilde{p}_{i,k+1} - \tilde{p}_{i,0}, d_t >^2) ,$$

   où T est un ensemble de deuxième surface élémentaire $\tilde{t}_{k+1}$ déterminées à l'itération k+1 ;
   chaque $\tilde{p}_{i,0}$ est un sommet de deuxième surface élémentaire défini en iii/ pour un sommet $p_i$ d'une première surface élémentaire ;
   $\alpha_i$ est une valeur qui est constante pour les sommets $\tilde{p}_{i,k+1}$ d'une même deuxième surface élémentaire $\tilde{t}_{k+1}$ ;
   $d_b$ est le vecteur unitaire colinéaire à l'os pour lequel la paire sélectionnée de premier et deuxième points de référence a été déterminée, et, $d_q$ étant le vecteur unitaire colinéaire à $(p_b, \tilde{p}_{i,0})$, le vecteur unitaire $d_t$ est égal au produit vectoriel des vecteurs $d_b$ et $d_q$.

8. Procédé de traitement de données selon la revendication 7, selon lequel les valeurs de $\alpha_i$ pour des surfaces élémentaires dans des zones ajustées de la surface sur l'objet sont choisies dans la plage [0,10].

9. Procédé de traitement de données selon la revendication 8, selon lequel les valeurs de $\alpha_i$ sont choisies dans la plage [10 ; +∞] dans les autres zones de ladite surface.

10. Procédé de traitement de données selon la revendication 2 et l'une quelconque des revendications 1 à 9, selon lequel à l'étape b/, la fonction à minimiser comporte au moins

$$E_{shape\_k+1} + E_{fit\_k+1}, \text{ avec } E_{fit\_k+1} = \beta \sum_{\tilde{t}_{k+1} \in F} \sum_{\tilde{p}_{i,k+1} \in \tilde{t}_{k+1}} < \tilde{p}_{i,k+1} - \tilde{p}_{i,0}, d_q >^2$$

où $\beta$ est une constante

F est un ensemble de deuxième surface élémentaire $\tilde{t}_{k+1}$ déterminées à itération k+1 et situées dans des zones ajustées de la surface sur l'objet, lesdites deuxièmes surfaces élémentaires déterminées comme se trouvant dans F étant alors supprimées de l'ensemble S ;

chaque $\tilde{p}_{i,0}$ est un sommet de deuxième surface élémentaire défini en iii/ pour le sommet $p_i$ d'une première surface élémentaire ;

$d_b$ est le vecteur unitaire colinéaire à l'os pour lequel la paire sélectionnée de premier et deuxième points de référence à été déterminée, et, $d_q$ étant le vecteur unitaire colinéaire à $(p_b, \tilde{p}_{i,0})$, le vecteur unitaire $d_t$ est égal au produit vectoriel des vecteurs $d_b$ et $d_q$.

11. Procédé de traitement de données selon la revendication 10, selon lequel $\beta$ est une constante choisie dans $[10 ; +\infty]$.

12. Programme (P) d'ordinateur à installer dans un dispositif (1) de traitement de données pour transformer une première surface 3D ($S_S$), adaptée pour revêtir un premier objet ($O_S$) et formée d'un maillage de premières surfaces élémentaires 2D, en une deuxième surface 3D ($S_C$), adaptée pour revêtir un deuxième objet ($O_C$) et formée d'un maillage de deuxièmes surfaces élémentaires 2D, ledit programme comprenant des instructions pour mettre en oeuvre les étapes d'un procédé selon l'une quelconque des revendications précédentes, lors d'une exécution du programme par des moyens de calcul (2) dudit dispositif.

13. Dispositif (1) de traitement de données pour transformer une première surface 3D ($S_S$), adaptée pour revêtir un premier objet ($O_S$) et formée d'un maillage de premières surfaces élémentaires 2D, en une deuxième surface 3D ($S_C$), adaptée pour revêtir un deuxième objet ($O_C$) et formée d'un maillage de deuxièmes surfaces élémentaires 2D, ledit dispositif de traitement étant adapté pour déterminer des transformations des premières surfaces élémentaires en des deuxièmes surfaces élémentaires respectives et comprenant :

- un superviseur adapté pour faire opérer itérativement un ensemble de modules comprenant un premier module de mise à jour et un deuxième module de mise à jour ;
- le premier module de mise à jour adapté pour, lors d'une $(k+1)^{ème}$ opération d'itération, k étant un entier supérieur ou égal à 0, pour chacun d'une pluralité de couples comprenant une première surface élémentaire et une deuxième surface élémentaire issue d'une transformation de la première surface élémentaire et ayant été délivrée par le deuxième module de mise à jour suite à la $k^{ème}$ opération itérative du superviseur, déterminer la projection de ladite deuxième surface élémentaire sur le plan de ladite surface élémentaire respective, et définir une matrice $T_{k+1}^t$ de transformation courante 2D pour ledit couple,

avec $T_{k+1}^t = P_k^{t'}(P^t)^{-1}$ et $P^t = [p_{n+1} - p_i]_{i=1 \text{ à } n}$, $P_k^{t'} = [p'_{n+1,k} - p'_{i,k}]_{i=1 \text{ à } n}$ ;

où $p_i$, pour i=1 à n, sont les sommets de la première surface élémentaire t d'un couple et $p_{n+1}$ est obtenu par décalage du sommet $p_1$ par un vecteur normal à ladite première surface, de norme donnée ;

où $(P^t)^{-1}$ est l'inverse de la matrice $P^t$ quand les premières surfaces élémentaires sont des triangles et est une matrice pseudo-inverse de la matrice $P^t$ sinon ;

où $p'_{i,k}$, pour i=1 à n, sont les sommets de ladite projection de la deuxième surface élémentaire et $p'_{n+1,k}$ est obtenu par décalage du sommet $p'_{1,k}$ dudit vecteur normal ;

- le deuxième module de mise à jour adapté pour, lors d'une $(k+1)^{ème}$ opération itération par le superviseur, k étant un entier supérieur ou égal à 0, déterminer les deuxièmes surfaces élémentaires obtenues pour la $(k+1)^{ème}$ itération, en tant que celles minimisant une fonction comportant au moins le terme $\sum_t \left\| \tilde{P}_{k+1}^t (P^t)^{-1} - T_{k+1}^t \right\|^2$,

où $T_{k+1}^t$ sont les matrices de transformation définies par le premier module lors de la $(k+1)^{ème}$ opération d'itération par le superviseur ;

avec $\tilde{P}_{k+1}^t = [\tilde{p}_{n+1,k+1} - \tilde{p}_{i,k+1}]_{i=1,\ldots,n}$,

où $\tilde{p}_{i,k+1}$, pour i=1 à n, sont les sommets de la deuxième surface élémentaire du couple telle que déterminée à la (k+1)$^{ème}$ itération et $\tilde{p}_{n+1,k+1}$ est obtenu par décalage du sommet $\tilde{p}_{1,k+1}$ par un vecteur normal à ladite deuxième surface, de norme donnée,

la minimisation étant réalisée en utilisant une technique itérative qui alterne entre la mise à jour de chaque matrice T'de transformation en fixant la matrice $\tilde{P}^t$ et la mise à jour de matrice $\tilde{P}^t$ en fixant les matrices $T^t$ de transformation.

**Patentansprüche**

1. Datenverarbeitungsverfahren zur Transformation einer ersten 3D-Oberfläche ($S_S$), die zum Beschichten eines ersten Objekts ($O_S$) ausgelegt und aus einem Netz von ersten 2D-Flächeneinheiten gebildet ist, in eine zweite 3D-Oberfläche ($S_C$), die zum Beschichten eines zweiten Objekts ($O_C$) ausgelegt und aus einem Netz von zweiten 2D-Flächeneinheiten gebildet ist, wobei das Verfahren **dadurch gekennzeichnet ist, dass** es einen iterativen Behandlungsschritt umfasst, in dem die Transformationen der ersten Flächeneinheit in jeweilige zweite Flächeneinheit bestimmt werden, wobei die Schritte iterativ umgesetzt werden, in denen:

a/ während eines (k+1)$^{-ten}$ aktuellen Iterationsschritts, wobei k eine ganze Zahl größer oder gleich 0 ist, für jedes einer Vielzahl von Paaren, die eine erste Flächeneinheit und eine zweite Flächeneinheit umfassen, die sich aus einer Transformation der ersten Flächeneinheit ergibt und bei der vorherigen Iteration k erhalten wurde, die Projektion der zweiten Flächeneinheit auf die Ebene der ersten Flächeneinheit bestimmt und eine Matrix

$T_{k+1}^t$ von aktueller 2D-Transformation für das Paar definiert wird,

$$\text{mit } T_{k+1}^t = P_k^{t'} (P^t)^{-1} \text{ und } P^t = [p_{n+1} - p_i]_{i=1 \text{ bis } n}, \quad P_k^{t'} = [p'_{n+1,k} - p'_{i,k}]_{i=1 \text{ bis } n};$$

wobei $p_i$, für i=1 bis n, die Eckpunkte der ersten Flächeneinheit t des Paares sind und $p_{n+1}$ durch Verschieben des Eckpunkts $p_i$ durch einen Normalenvektor zur ersten Oberfläche erhalten wird;

wobei $(P^t)^{-1}$ der Kehrwert der Matrix $P^t$ ist, wenn die ersten Flächeneinheiten Dreiecke sind, und ansonsten eine pseudoinverse Matrix der Matrix $P^t$ ist;

wobei $p'_{i,k}$, für i=1 bis n, die Eckpunkte der Projektion der zweiten Flächeneinheit sind und $p'_{n+1,k}$ durch Verschieben des Eckpunkts $p'_{1,k}$ des Normalenvektors erhalten wird;

b/ die zweiten Flächeneinheiten, die für die (k+1)$^{-te}$ Iteration erhalten wurden, als die bestimmt werden, die eine

$$E_{\text{shape\_k+1}} = \sum_{\tilde{t}_{k+1} \in S} \left\| \tilde{P}_{k+1}^t (P^t)^{-1} - T_{k+1}^t \right\|^2$$

Funktion minimieren, die mindestens den Ausdruck umfasst,

wobei S eine Gesamtheit von zweiten, in Schritte k+1 bestimmten Flächeneinheiten $\tilde{t}_{k+1}$ ist;

$T_{k+1}^t$ die in Schritt a/ der (k+1)$^{-ten}$ Iteration bestimmten Transformationsmatrizen sind;

$$\tilde{P}_{k+1}^t = [\tilde{p}_{n+1,k+1} - \tilde{p}_{i,k+1}]_{i=1,..,n};$$

wobei $\tilde{p}_{i,k+1}$, für i=1 bis n, die Eckpunkte der zweiten Flächeneinheit $\tilde{t}_{k+1}$ sind, wie in der (k+1)$^{-ten}$ Iteration bestimmt und $\tilde{p}_{n+1,k+1}$ durch Verschieben des Eckpunkts $\tilde{p}_{1,k+1}$ durch einen Normalenvektor zur zweiten Flächeneinheit $\tilde{t}_{k+1}$ erhalten wird,

wobei die Minimierung unter Verwendung einer iterativen Technik durchgeführt wird, die zwischen der Aktualisierung jeder Transformationsmatrix $T^t$ unter Fixierung der Matrix $\tilde{P}^t$ und Aktualisierung der Matrix $\tilde{P}^t$ durch Fixierung der Transformationsmatrizen $T^t$ wechselt.

2. Datenverarbeitungsverfahren nach Anspruch 1, umfassend die folgenden Schritte, die für jeden Eckpunkt einer ersten Flächeneinheit während eines iterativen Verarbeitungsinitialisierungsschritts implementiert sind, um eine zweite Flächeneinheit ($S_C$) für die erste Flächeneinheit ($S_C$) zu definieren, wobei die ersten und zweiten Objekte jeweils durch Daten definiert sind, die Knochenpunkte eines Objektanimationsskeletts und Objekthüllpunkte definieren, wobei eine Isomorphismusfunktion eine Entsprechung zwischen den Punkten des ersten Objekts auf die Punkte des zweiten Objekts entwickelt:

i/ ein Paar von Punkten für jeden Knochen aus einer Vielzahl von Knochen des Skeletts des ersten Objekts bestimmt wird, umfassend einen ersten Punkt, der als der Punkt des Knochens bestimmt wird, der dem Eckpunkt am nächsten liegt, und einen zweiten Punkt, der als der Punkt der Hülle des ersten Objekts bestimmt wird, das sich in dem Segment befindet, das den Eckpunkt und den ersten Punkt verbindet, und der dem Eckpunkt am nächsten ist;

ii/ unter den für jeweilige Knochen bestimmten Paare mindestens ein Paar bestimmt wird, und zwar das Paar von ersten und zweiten Referenzpunkten für den Eckpunkt der ersten Flächeneinheit, wobei das ausgewählte Paar einem Minimum einer Funktion entspricht, die als Variablen den Abstand zwischen dem Eckpunkt der ersten Flächeneinheit und dem zweiten Referenzpunkt eines Paares und dem Skalarprodukt zwischen einem Einheitsvektor kollinear zu Knochen umfasst, und der Vektor den Eckpunkt und den ersten Punkt des Paares verbindet;

iii/ ein Eckpunkt der zweiten Flächeneinheit als eine Funktion des Ergebnispunkts des Anwendens der Isomorphismusfunktion auf den zweiten Referenzpunkt definiert wird, wobei der Ergebnispunkt dann um einen Vektor parallel zu demjenigen verschoben wird, der die beiden Ergebnispunkte des Anwendens der Isomorphismusfunktion auf den ersten und zweiten Referenzpunkt verbindet, wobei der Standard des Vektors eine Funktion des Standards des Vektors ist, der den Eckpunkt der ersten Oberfläche und den zweiten Referenzpunkt verbindet.

3. Datenverarbeitungsverfahren nach Anspruch 2, wobei in Schritt ii/ die den Standard repräsentierende Funktion gleich ist mit $\left\| p_m, p_i \right\| \times e^{-\frac{<v_b, v>^2}{\sigma^2}}$, wobei $\sigma$ ein konstanter Wert ist, $p_m$ der zweite Punkt eines Paares ist, $p_i$ der Eckpunkt der ersten Oberfläche ist, $v_b$ der zum Knochen kolineare Einheitsvektor ist, und $v$ der Vektor ist, der den Eckpunkt und den ersten Punkt des Paares verbindet.

4. Datenverarbeitungsverfahren nach Anspruch 2 oder 3, wobei in Schritt iii/ der Eckpunkt der zweiten Oberfläche definiert ist als gleich

$$\text{Eckpunkt der zweiten Oberfläche definiert ist als gleich } \tilde{p}_m + \left\| p_m, p_i \right\| \cdot v_{bm},$$

wobei $p_i$ der Eckpunkt der ersten Flächeneinheit ist;
$\tilde{p}_m$ der Punkt ist, der sich aus der Anwendung der Isomorphismusfunktion auf den zweiten Referenzpunkt ergibt;
$v_{bm}$ ein Einheitsvektor parallel zum Segment $[\tilde{p}_b, \tilde{p}_m]$ ist, $\tilde{p}_b$ der Punkt ist, der sich aus der Anwendung der Isomorphismusfunktion auf den ersten Referenzpunkt ergibt.

5. Datenverarbeitungsverfahren nach einem der Ansprüche 2 bis 4, wobei, wenn in Schritt iii zwei Referenzpaare ausgewählt werden, der Eckpunkt der zweiten Oberfläche definiert ist als $w_1 \cdot \tilde{p}_{i1} + w_2 \cdot \tilde{p}_{i2}$,
mit $w_1$ und $w_2$ größer als 0 und $w_1 + w_2 = 1$

$$\tilde{p}_{i1} = \tilde{p}_{m1} + \left\| p_{m1}, p_i \right\| \cdot v_{bm1} \quad \text{et} \quad \tilde{p}_{i2} = \tilde{p}_{m2} + \left\| p_{m2}, p_i \right\| \cdot v_{bm2}$$

wobei $p_i$ der Eckpunkt der ersten Flächeneinheit ist;
wobei $\tilde{p}_{mn}$ der Punkt ist, der sich aus der Anwendung der Isomorphismusfunktion auf den zweiten Referenzpunkt des n-ten Referenzpaares ergibt, n = 1 oder 2;
wobei $v_{bmn}$ ein Einheitsvektor ist, der zum Segment $[\tilde{p}_{bn}, \tilde{p}_{mn}]$ parallel ist, $\tilde{p}_{bn}$ der Punkt ist, der sich aus der Anwendung der Isomorphismusfunktion auf den ersten Referenzpunkt des n-ten Referenzpaares ergibt.

6. Datenverarbeitungsverfahren nach Anspruch 5, wobei $w_1 = \dfrac{\arctan((5*(z-0,5)+\frac{\pi}{2})}{\pi}$, wobei $z$ die Koordinate der Projektion des Eckpunkts $p_i$ auf dem Segment ist, das die beiden Referenzpunkte $p_{b1}$ und $p_{b2}$, unter Berücksichtigung von $p_{b1}$ als Koordinaten-Nullpunkt, verbindet.

7. Datenverarbeitungsverfahren nach Anspruch 2 und einem der Ansprüche 1 bis 6, wobei in Schritt b/ die zu minimierende Funktion mindestens $E_{shape\_k+1} + E_{rl\_k+1}$ umfasst, mit

$$E_{rl\_k+1} = \sum_{\tilde{t}_{k+1}} \sum_{\tilde{p}_{i,k+1} \in \tilde{t}_{k+1}} \alpha_i (< \tilde{p}_{i,k+1} - \tilde{p}_{i,0}, d_b >^2 + < \tilde{p}_{i,k+1} - \tilde{p}_{i,0}, d_t >^2)$$

wobei T ein Satz einer zweiten Flächeneinheit $\tilde{t}_{k+1}$ ist, bestimmt bei der Iteration k+1;
jedes $\tilde{p}_{i,0}$ ein zweiter Flächeneinheitseckpunkt ist, der in iii/ für einen Eckpunkt $p_i$ einer ersten Flächeneinheit definiert ist;
$\alpha_i$ ein Wert ist, der für die Eckpunkte $\tilde{p}_{i,k+1}$ einer gleichen zweiten Flächeneinheit $\tilde{t}_{k+1}$ konstant ist;
$d_b$ der kollineare Knochen-Einheitsvektor ist, für den das ausgewählte Paar von ersten und zweiten Referenzpunkten bestimmt wurde, und, wenn $d_q$ der Einheitsvektor ist, der kollinear ist zu $(p_b, \tilde{p}_{i,0})$, der Einheitsvektor $d_t$ gleich dem Vektorprodukt der Vektoren $d_b$ et $d_q$ ist.

8. Datenverarbeitungsverfahren nach Anspruch 7, wobei die Werte von ai für Flächeneinheiten in angepassten Bereichen der Oberfläche auf dem Objekt aus dem Bereich [0,10] ausgewählt werden.

9. Datenverarbeitungsverfahren nach Anspruch 8, wobei die Werte von a; aus dem Bereich [10; +∞] in den anderen Bereichen der Oberfläche ausgewählt werden.

10. Datenverarbeitungsverfahren nach Anspruch 2 und einem der Ansprüche 1 bis 9, wobei in Schritt b/ die zu minimierende Funktion mindestens Folgendes umfasst

$$E_{shape\_k+1} + E_{fit\_k+1}, \text{ avec } E_{fit\_k+1} = \beta \sum_{\tilde{t}_{...} \in F} \sum_{\tilde{p}_{...} \in \tilde{t}_{...}} < \tilde{p}_{l,k+1} - \tilde{p}_{i,0}, d_q >^2$$

wobei β eine Konstante ist
F ein Satz einer zweiten Flächeneinheit $\tilde{t}_{k+1}$ ist, bestimmt bei der Iteration k+1 und befindlich in angepasste Bereiche der Oberfläche auf dem Objekt, wobei die zweiten Flächeneinheiten, die als in F befindlich bestimmt sind, dann aus dem Satz S entfernt werden;
jedes $\tilde{p}_{i,0}$ ein zweiter Flächeneinheitseckpunkt ist, der in iii/ für den Eckpunkt $p_i$ einer ersten Flächeneinheit definiert ist;
db der kollineare Knochen-Einheitsvektor ist, für den das ausgewählte Paar von ersten und zweiten Referenzpunkten bestimmt wurde, und, wenn $d_q$ der Einheitsvektor ist, der kollinear ist zu $(p_b, \tilde{p}_{i,0})$, der Einheitsvektor $d_t$ gleich dem Vektorprodukt der Vektoren $d_b$ et $d_q$ ist.

11. Datenverarbeitungsverfahren nach Anspruch 10, wobei β eine Konstante ist, ausgewählt aus [10; +∞].

12. Computerprogramm (P) zur Installation in einer Datenverarbeitungsvorrichtung (1) zur Transformation einer ersten 3D-Oberfläche $(S_S)$, die zur Beschichtung eines ersten Objekts $(O_S)$ ausgelegt ist und gebildet ist aus einem Netz von ersten 2D-Flächeneinheiten zu einer zweiten 3D-Oberfläche $(S_C)$, die zur Beschichtung eines zweiten Objekts $(O_C)$ ausgelegt ist und gebildet ist aus einem Netz von zweiten 2D-Flächeneinheiten, wobei das Programm Anweisungen zum Implementieren der Schritte eines Prozesses gemäß einem der vorhergehenden Ansprüche umfasst, wenn das Programm durch eine Recheneinrichtung (2) der Vorrichtung ausgeführt wird.

13. Datenverarbeitungsvorrichtung (1) zur Transformation einer ersten 3D-Oberfläche $(S_S)$, ausgelegt zur Beschichtung eines ersten Objekts $(O_S)$ und gebildet durch ein Netz aus ersten 2D-Flächeneinheiten, in eine zweite 3D-Oberfläche, die zur Beschichtung eines zweiten Objekts $(O_C)$ ausgelegt ist und aus einem Netz von zweiten 2D-Flächeneinheiten gebildet ist, wobei die Behandlungsvorrichtung ausgelegt ist, um Transformationen der ersten Flächeneinheiten in jeweilige zweite Flächeneinheiten zu bestimmen, und umfassend:

- ein Überwachungsprogramm, das dazu ausgelegt ist, einen Satz von Modulen iterativ zu betreiben, der ein erstes Aktualisierungsmodul und ein zweites Aktualisierungsmodul beinhaltet;
- wobei das erste Aktualisierungsmodul so ausgelegt ist, dass es, bei einem $(k+1)$-ten Operationsbetrieb, wobei k eine ganze Zahl größer oder gleich 0 ist, für jedes einer Vielzahl von Paaren, die eine erste Flächeneinheit und eine zweite Flächeneinheit umfassen, die sich aus einer Transformation der ersten Flächeneinheit ergibt und von dem zweiten Aktualisierungsmodul nach der k-ten iterativen Operation des Überwachungsprogramms geliefert wurde, die Projektion der zweiten Flächeneinheit auf die Ebene der jeweiligen Flächeneinheit bestimmt und eine Matrix $T'_{k+1}$ der aktuellen 2D-Transformation für das Paar definiert,

$$\text{mit } T'_{k+1} = P_k^{t'}(P^t)^{-1} \text{ et } P^t = [p_{n+1} - p_i]_{i=1 \text{ bis } n}, P_k^{t'} = [p'_{n+1,k} - p'_{i,k}]_{i=1 \text{ bis } n};$$

wobei $p_i$, für i=1 bis n, die Eckpunkte der ersten Flächeneinheit t eines Paares sind und $p_{n+1}$ erhalten wird, indem der Eckpunkt $p_i$ um einen Vektor senkrecht zu der ersten Oberfläche eines gegebenen Standards verschoben wird;
wobei $(P^t)^{-1}$ der Kehrwert der Matrix $P^t$ ist, wenn die ersten Flächeneinheiten Dreiecke sind, und ansonsten eine pseudoinverse Matrix der Matrix $P^t$ ist;
wobei $p'_{i,k}$, für i=1 bis n, die Eckpunkte der Projektion der zweiten Flächeneinheit sind und $p'_{n+1,k}$ durch Verschieben des Eckpunkts $p'_{1,k}$ des Normalenvektors erhalten wird;

- das zweite Aktualisierungsmodul dazu ausgelegt ist, um während einer (k+1)-ten Iterationsoperation durch das Überwachungsprogramm, wobei k eine ganze Zahl größer oder gleich 0 ist, die für die (k+1)-te Iteration erhaltenen zweiten Flächeneinheiten als solche zu bestimmen, die eine Funktion minimieren,

$$\sum_t \left\| \tilde{P}'_{k+1}(P')^{-1} - T'_{k+1} \right\|^2$$

die mindestens den Begriff umfasst,

wobei $T'_{k+1}$ die Transformationsmatrizen sind, die durch das erste Modul während der (k+1)-ten Iterationsoperation durch das Überwachungsprogramm definiert werden;

$$\text{mit } \tilde{P}'_{k+1} = [\tilde{p}_{n+1,k+1} - \tilde{p}_{i,k+1}]_{i=1,\ldots,n},$$

wobei $\tilde{p}_{k+1}$, für i=1 bis n, die Eckpunkte der zweiten Flächeneinheit des Paares sind, wie in der (k+1)-ten Iteration bestimmt, und $\tilde{p}_{n+1,k+1}$ durch Verschieben des Eckpunkts $\tilde{p}_{1,k+1}$ durch einen Normalenvektor senkrecht zur zweiten Oberfläche bestimmt wird,
wobei die Minimierung unter Verwendung einer iterativen Technik durchgeführt wird, die zwischen der Aktualisierung jeder Transformationsmatrix $T^t$ unter Fixierung der Matrix $\tilde{P}^t$ und Aktualisierung der Matrix $P^t$ durch Fixierung der Transformationsmatrizen $T^t$ wechselt.

## Claims

1.  Data processing method for transforming a first 3D surface ($S_S$) which is adapted to cover a first object ($O_S$) and is formed of a mesh of first 2D elementary surfaces into a second 3D surface ($S_C$) which is adapted to cover a second object ($O_C$) and is formed of a mesh of second 2D elementary surfaces, said method being **characterized in that** it comprises a step of iterative processing in which the transformations of the first elementary surfaces into respective second elementary surfaces are determined by carrying out in an iterative manner steps in which:

    a/ in a current (k+1)th iteration step, k being an integer greater than or equal to 0, for each of a plurality of couples comprising a first elementary surface and a second elementary surface derived from a transformation of the first elementary surface and having been obtained in the preceding iteration k, the projection of said second elementary surface on the plane of said first elementary surface is determined, and a current 2D transformation matrix $T^t_{k+1}$ is defined for said couple,

    where $T^t_{k+1} = P_k^{t'}(P^t)^{-1}$ and $P^t = [p_{n+1} - p_i]_{i=1 \text{ to } n}$, $P_k^{t'} = [p'_{n+1,k} - p'_{i,k}]_{i=1 \text{ to } n}$;

    wherein $p_i$, for i=1 to n, are the vertices of the first elementary surface t of the couple and $p_{n+1}$ is obtained by offsetting the vertex $p_1$ by a normal vector of given norm to said first surface;
    wherein $(P^t)^{-1}$ is the inverse of the matrix $P^t$ when the first elementary surfaces are triangles and is a pseudo-inverse matrix of the matrix $P^t$ otherwise;

wherein $p'_{i,k}$, for i=1 to n, are the vertices of said projection of the second elementary surface and $p'_{n+1,k}$ is obtained by offsetting the vertex $p'_{1,k}$ of said normal vector;

b/ the second elementary surfaces obtained for the $(k+1)^{th}$ iteration are determined as those minimizing a function including at least the term

$$E_{shape\_k+1} = \sum_{\tilde{t}_{k+1} \in S} \left\| \ \widetilde{P}^t_{k+1}(P^t)^{-1} - T'_{k+1} \right\|^2 ,$$

wherein S is a set of second elementary surfaces $\tilde{t}_{k+1}$ determined in step k+1; $T^t_{k+1}$ are the transformation matrices defined in step a/ of the $(k+1)^{th}$ iteration;

$$\widetilde{P}^t_{k+1} = \left[ \widetilde{p}_{n+1,k+1} - \widetilde{p}_{i,k+1} \right]_{i=1,.,n} ;$$

wherein $\tilde{p}_{i,k+1}$, for i=1 to n, are the vertices of the second elementary surface $\tilde{t}_{k+1}$ as determined in the $(k+1)^{th}$ iteration and $\tilde{p}_{n+1,k+1}$ is obtained by offsetting the vertex $\tilde{p}_{1,k+1}$ by a vector of said given norm normal to said second elementary surface $\tilde{t}_{k+1}$, the minimization being performed by using an iterative technique, which alternates between updating each transformation matrix $T^t$, while keeping the matrix $\tilde{P}^t$ fixed, and updating the matrix $\tilde{P}^t$ while keeping the transformation matrices $T^t$ fixed.

2. Data processing method according to claim 1, comprising the following steps carried out for each vertex of a first elementary surface in an initialization step of the iterative processing, in order to define a second elementary surface ($S_C$) for said first elementary surface ($S_S$), the first and second objects each being defined by data defining bone points of an object animated skeleton and object envelope points, an isomorphism function establishing correspondence between said points of the first object and said points of the second object:

   i/ a pair of points is determined for each bone of a plurality of bones of the skeleton of the first object, comprising a first point determined as being the point of said bone that is closest to the vertex and comprising a second point determined as being the point of the envelope of the first object that is situated in the segment joining the vertex and said first point, and being closest to said vertex;

   ii/ there is selected from said pairs determined for respective bones at least one pair, called the pair of first and second points of reference for said vertex of the first elementary surface, said selected pair corresponding to a minimum of a function including as variables the distance between said vertex of the first elementary surface and the second point of reference of a pair and the scalar product between a unit vector collinear to the bone and the vector joining said vertex and the first point of the pair;

   iii/ a vertex of the second elementary surface is defined as a function of the point resulting from the application of the isomorphism function to the second point of reference, said resultant point then being offset by a vector parallel to that connecting the two points resulting from the application of the isomorphism function to the first and second points of reference, the norm of said vector being a function of the norm of the vector joining said vertex of the first surface and the second point of reference.

3. Data processing method according to claim 2, according to which in step ii/ said function representing the norm is equal to $\left\| pm, \ pi \right\| \times e^{\frac{<v_b,v>^2}{\sigma^2}}$ , wherein $\sigma$ is a constant value, $p_m$ is the second point of a pair, $p_i$ is said vertex of the first surface, $v_b$ is the unit vector collinear to the bone, and v is the vector joining said vertex and the first point of the pair.

4. Data processing method according to claim 2 or 3, according to which in step iii/ the vertex of the second surface is defined as being equal to $\tilde{p}_m + \left\| p_m, p_i \right\| . v_{bm}$,

   $p_i$ being said vertex of the first elementary surface;
   $\tilde{p}_m$ being the point resulting from the application of the isomorphism function to the second point of reference;

$v_{bm}$ being a unit vector parallel to the segment $[\tilde{p}_b, \tilde{p}_m]$, $\tilde{p}_b$ being the point resulting from the application of the isomorphism function to the first point of reference.

5. Data processing method according to any one of claims 2 to 4, according to which, if two reference pairs are selected in step iii, the vertex of the second surface is defined as being equal to $w_1 \cdot \tilde{p}_{i1} + w_2 \cdot \tilde{p}_{i2}$, where $w_1$ and $w_2$ are greater than 0 and $w_1 + w_2 = 1$

$$\tilde{p}_{i1} = \tilde{p}_{m1} + \| p_{m1}, p_i \| \cdot v_{bm1} \text{ and } \tilde{p}_{i2} = \tilde{p}_{m2} + \| p_{m2}, p_i \| \cdot v_{bm2};$$

$p_i$ being said vertex of the first elementary surface;
$\tilde{p}_{mn}$ being the point resulting from the application of the isomorphism function to the second point of reference of the $n^{th}$ reference pair, n = 1 or 2;
$v_{bmn}$ being a unit vector parallel to the segment $[\tilde{p}_{bn}, \tilde{p}_{mn}]$, $\tilde{p}_{bn}$ is the point resulting from the application of the isomorphism function to the first point of reference of the $n^{th}$ reference pair.

6. Data processing method according to claim 5, according to which $w_1 = \dfrac{\arctan((5*(z-0.5)+\frac{\pi}{2})}{\pi}$ wherein z is the coordinate of the projection of the vertex $p_i$ on the segment connecting the two points of reference $p_{b1}$ and $p_{b2}$, $p_{b1}$ being considered as the zero coordinate point.

7. Data processing method according to claim 2 and any one of claims 1 to 6, according to which, in step b/, the function to be minimized includes at least $E_{shape\_k+1} + E_{rl\_k+1}$, where

$$E_{rl\_k+1} = \sum_{\tilde{t}_{k+1}} \sum_{\tilde{p}_{i,k+1} \in \tilde{t}_{k+1}} \alpha_i \left( < \tilde{p}_{i,k+1} - \tilde{p}_{i,0}, d_b >^2 + < \tilde{p}_{i,k+1} - \tilde{p}_{i,0}, d_t >^2 \right),$$

wherein T is a set of second elementary surfaces $\tilde{t}_{k+1}$ determined in iteration k+1; each $\tilde{p}_{i,0}$ is a second elementary surface vertex defined in iii/ for a vertex $p_i$ of a first elementary surface;
$\alpha_i$ is a value which is constant for the vertices $\tilde{p}_{i,k+1}$ of a same second elementary surface $\tilde{t}_{k+1}$;
$d_b$ is the unit vector collinear to the bone for which the selected pair of first and second points of reference has been determined, and, $d_q$ being the unit vector collinear to $(p_b, \tilde{p}_{i,0})$, the unit vector $d_t$ is equal to the vector product of the vectors $d_b$ and $d_q$.

8. Data processing method according to claim 7, according to which the values of $\alpha_i$ for elementary surfaces in adjusted zones of the surface on the object are chosen in the range [0, 10].

9. Data processing method according to claim 8, according to which the values of $\alpha_i$ are chosen in the range [10 ; +∞] in the other zones of said surface.

10. Data processing method according to claim 2 and any one of claims 1 to 9, according to which, in step b/, the function to be minimized includes at least $E_{shape\_k+1} + E_{fit\_k+1}$, where

$$E_{fit\_k+1} = \beta \sum_{\tilde{t}_{k+1} \in F} \sum_{\tilde{p}_{i,k+1} \in \tilde{t}_{k+1}} < \tilde{p}_{i,k+1} - \tilde{p}_{i,0}, d_q >^2$$

wherein $\beta$ is a constant,
F is a set of second elementary surfaces $\tilde{t}_{k+1}$ determined in iteration k+1 and situated in adjusted zones of the surface on the object, said second elementary surfaces determined as being found in F then being removed from the set S;
each $\tilde{p}_{i,0}$ is a second elementary surface vertex defined in iii/ for the vertex $p_i$ of a first elementary surface;
$d_b$ is the unit vector collinear to the bone for which the selected pair of first and second points of reference has been determined, and, $d_q$ being the unit vector collinear to $(p_b, \tilde{p}_{i,0})$, the unit vector $d_t$ is equal to the vector product of the vectors $d_b$ and $d_q$.

11. Data processing method according to claim 10, according to which $\beta$ is a constant chosen in [10 ; +∞].

12. Computer program (P) which is to be installed in a data processing device (1) for transforming a first 3D surface ($S_S$) which is adapted to cover a first object ($O_S$) and is formed of a mesh of first 2D elementary surfaces into a second 3D surface ($S_C$) which is adapted to cover a second object ($O_C$) and is formed of a mesh of second 2D elementary surfaces, said program comprising instructions for carrying out the steps of a method according to any one of the preceding claims during execution of the program by computing means (2) of said device.

13. Data processing device (1) for transforming a first 3D surface ($S_S$) which is adapted to cover a first object ($O_S$) and is formed of a mesh of first 2D elementary surfaces into a second 3D surface ($S_C$) which is adapted to cover a second object ($O_C$) and is formed of a mesh of second 2D elementary surfaces, said processing device being adapted to determine transformations of the first elementary surfaces into respective second elementary surfaces and comprising:

   - a supervisor adapted to run iteratively a set of modules comprising a first updating module and a second updating module;
   - the first updating module adapted to, in a $(k+1)^{th}$ iteration operation, k being an integer greater than or equal to 0, for each of a plurality of couples comprising a first elementary surface and a second elementary surface derived from a transformation of the first elementary surface and having been delivered by the second updating module following the $k^{th}$ iterative operation of the supervisor, determine the projection of said second elementary surface on the plane of said respective elementary surface and define a current 2D transformation matrix $T_{k+1}^t$ for said couple,

   where $T_{k+1}^t = P_k^{t'}(P^t)^{-1}$ and $P^t = [P_{n+1} - p_i]_{i=1\ to\ n}$, $P_k^{t'} = [p'_{n+1,k} - p'_{i,k}]_{i=1\ to\ n}$;
   wherein $p_i$, for i=1 to n, are the vertices of the first elementary surface t of a couple and $p_{n+1}$ is obtained by offsetting the vertex $p_1$ by a vector normal to said first surface, of given norm;
   wherein $(P^t)^{-1}$ is the inverse of the matrix $P^t$ when the first elementary surfaces are triangles and is a pseudo-inverse matrix of the matrix $P^t$ otherwise;
   wherein $p'_{i,k}$, for i=1 to n, are the vertices of said projection of the second elementary surface and $p'_{n+1,k}$ is obtained by offsetting the vertex $p'_{1,k}$ of said normal vector;
   - the second updating module adapted to, in a $(k+1)^{th}$ iteration operation by the supervisor, k being an integer greater than or equal to 0, determine the second elementary surfaces obtained for the $(k+1)^{th}$ iteration as those minimizing a function including at least the term $\sum_t \left\| \tilde{P}_{k+1}^t (P^t)^{-1} - T_{k+1}^t \right\|^2$,

   wherein $T_{k+1}^t$ are the transformation matrices defined by the first module in the $(k+1)^{th}$ iteration operation by the supervisor;
   where $\tilde{P}_{k+1}^t = \left[ \tilde{p}_{n+1,k+1} - \tilde{p}_{i,k+1} \right]_{i=1,...,n}$,
   wherein $\tilde{p}_{i,k+1}$, for i=1 to n, are the vertices of the second elementary surface of the couple as determined in the $(k+1)^{th}$ iteration and $\tilde{p}_{n+1,k+1}$ is obtained by offsetting the vertex $\tilde{p}_{1,k+1}$ by a vector normal to said second surface, of given norm,
   the minimization being performed by using an iterative technique, which alternates between updating each transformation matrix $T^t$, while keeping the matrix $\tilde{P}^t$ fixed, and updating the matrix $\tilde{P}^t$ while keeping the transformation matrices $T^t$ fixed.

## FIG.1

$$p_i \longrightarrow (p_b, p_m) \quad i=1,2,3 \qquad 202\_a$$

$$\widetilde{p}_b = F_{cross}(p_b) \; ; \; \widetilde{p}_m = F_{cross}(p_m) \qquad 202\_b$$

$$\widetilde{p}_{i,0} = \widetilde{p}_m + \left\| p_m, p_g \right\| . v_{bm} \qquad 202\_c$$

## FIG.3

200

$$P^t = (p_4\text{-}p_1,\ p_4\text{-}p_2,\ p_4\text{-}p_3)$$ —— 201

$$T_0 : (\widetilde{p}_{1,0},\ \widetilde{p}_{2,0},\ \widetilde{p}_{3,0}\,)$$ —— 202

203

$k=k+1$

Non

$E_{k+1} < d_{max}$ —— 204

Oui

⊠

Détermination de $T_{k+1}^t$ pour chaque triangle source t —— 203_a

Détermination du triangle cible $\widetilde{t}_{k+1}$ pour chaque triangle source t :

$$\widetilde{p}_{1,k},\widetilde{p}_{2,k},\widetilde{p}_{3,k}$$ —— 203_b

203

## FIG.2

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MOORE. C. ; L. MULLET, K. K. ; YOUNG, M. B. P.** Concepts of Pattern Grading : Techniques for Manual and Computer Grading. Fairchild Books And Visuals, 2001
- **WANG. C. C. L. ; WANG. Y. ; YUEN, M. M. F.** Design automation for customized apparel products. *Comput. Aided Des.,* 2005, vol. 37, 675-691
- **WANG. C. C. L. ; C. HUI, K. ; M. TONG. K.** Volume parameterization for design automation of customized free-form products. *IEEE Transactions on Automation Science and Engineering,* 2007, vol. 4, 11-21
- **MENG. Y. ; WANG. C. C. ; JIN. X.** flexible shape control for automatic resizing of apparel products. *Computer-Aided Design,* 2012, vol. 44 (1), 68-76
- **BEN-CHEN M. ; WEBER O. ; GOTSMAN, C.** Spatial déformation transfer. *Eurographics/ ACM SIGGRAPH Symposium on Computer Animation,* 2009
- **KRAEVOY. V. ; SHEFFER. A. ; COHEN-OR. D. ; SHAMIR. A.** Non-homogeneous resizing of complex models. *ACM Trans. Graph,* 2008, 111
- Customizing 3D garments based on volumetric deformation. **JITUO LI et al.** COMPUTERS IN INDUSTRY. ELSEVIER SCIENCE PUBLISHERS, 07 Avril 2011, vol. 62, 693-707

- **ROBERT W. SUMMER et al.** Deformation transfer for triangle meshes. *ACM TRANSACTIONS ON GRAPHICS,* 01 Août 2004, vol. 23 (3), 399
- **SHEFFER A. ; PRAUN E. ; ROSE, K. 2006.** Mesh parameterization methods and their applications. *Found. Trends. Comput. Graph. Vis.,* vol. 2, 105-171
- **CHANG. Y.-T. ; CHEN. B.-Y. ; LUO. W.-C. ; HUANG, J.-B.** volume parameterization. *Proceedings of Computer Graphics International,* 2006, 78-89
- **CORDIER. F. ; SEO. H. ; MAGNENAT-THAL-MANN, N.** Made-to-measure technologies for an online clothing store. *IEEE Computer Graphics and Applications,* 2003, vol. 23, 38-48
- **MENG. Y. ; WANG. C. C. ; JIN. X.** Flexible shape control for automatic resizing of apparel products. *Computer-Aided Design,* 2012, vol. 44 (1), 68-76
- **SHEFFER. A. ; LEVY. B. ; MOGILNITSKY. M. ; BO-GOMYAKOV. A.** Abf++: fast and robust angle based flattening. *ACM Trans. Graph.,* 24 Avril 2005, 311-330